# EUROPEAN PATENT SPECIFICATION

(11) **EP 3 039 856 B1**
(45) Date of publication and mention of the grant of the patent: **02.01.2019**
(21) Application number: 14806456.1
(22) Date of filing: 07.11.2014
(51) Int. Cl.: H04N 5/225, G03B 29/00, H04N 5/232, G06F 3/041, H04M 1/02

(54) **INFORMATION ACQUIRING DEVICE, INFORMATION PROCESSING DEVICE AND NON-TRANSITORY COMPUTER READABLE MEDIUM**
INFORMATIONSERFASSUNGSVORRICHTUNG, INFORMATIONSVERARBEITUNGSVORRICHTUNG UND NICHTTRANSITORISCHES COMPUTERLESBARES MEDIUM
DISPOSITIF D'ACQUISITION D'INFORMATIONS, DISPOSITIF DE TRAITEMENT D'INFORMATIONS ET SUPPORT LISIBLE PAR ORDINATEUR NON TRANSITOIRE

(30) Priority: 14.11.2013 JP 2013235935
(43) Date of publication of application: 06.07.2016
(73) Proprietor: Sony Corporation, Tokyo 108-0075 (JP)
(72) Inventor: ITO, Ryogo, Tokyo 108-0075 (JP); AKAMATSU, Kazuma, Tokyo 108-0075 (JP); KATSUMATA, Shunsuke, Tokyo 108-0075 (JP); ESHITA, Shiro, Tokyo 108-0075 (JP); TAKAGI, Megumi, Tokyo 108-0075 (JP); YAMAMOTO, Ayumi, Tokyo 108-0075 (JP)
(74) Representative: D Young & Co LLP
(86) International application number: PCT/JP2014/005608
(87) International publication number: WO 2015/072121

(56) References cited:
- WO-A1-2013/095409
- US-A- 5 394 552
- US-A- 5 526 493
- US-A1- 2006 152 576
- US-A1- 2011 212 687
- US-A1- 2012 242 617
- US-A1- 2013 141 640
- US-A1- 2013 157 574
- JR Raphael: "Automatically disable Android's lock screen when you're home", , 17 August 2011 (2011-08-17), XP002734209, Retrieved from the Internet: URL:http://www.computerworld.com/article/2 470880/mobile-apps/automatically-disable-a ndroid-s-lock-screen-when-you-re-home.html [retrieved on 2015-01-09]

## Description

### [CROSS REFERENCE TO RELATED APPLICATIONS]

This application claims the benefit of Japanese Priority Patent Application JP 2013-235935 filed November 14, 2013.

### [Technical Field]

The present technology relates to an information processing device and an imaging device. In detail, the present technology relates to the information processing device, an imaging device, an imaging system and an information processing method to perform processing based on a user operation, and a program that makes a computer execute the method.

### [Background Art]

An imaging device such as a digital still camera or a digital video camera (for instance, a camera integrated type recorder) that images an object, generates an image (image data) and records the image as contents has been widely spread. Also, there exists a wireless communication technology of exchanging various kinds of data utilizing wireless communication.

Also, there exists a technology of operating an imaging device by another device utilizing wireless communication. For instance, there is proposed an electronic device that, when a contact operation to an operation switch image displayed at a display part is detected, makes an imaging device execute an operation corresponding to the operation switch image on which the contact operation has been performed (for instance, see PTL 1).

### [Citation List]

### [Patent Literature]

[PTL 1]
JP 2009-94591A

US 2013/141640 relates to a digital photographing system and method of operating digital photographing system.

US 2006/152576 considers a mobile communication device having detachable wireless camera and camera module for a mobile communication device
US 2011/0212687 A1 discloses use of near field communication to enable a device locking state.

Further previously proposed arrangements are disclosed in US 5526493 A, US 5394552 A and WO 2013/095409 A1.

### [Summary]

### [Technical Problem]

In the above-mentioned related art, since the imaging device is operated by the electronic device utilizing the wireless communication, for instance, even when the imaging device and the electronic device are at a distance, the imaging device is operated using the electronic device.

Here, for instance, assume that the imaging device is attached to an information processing device capable of operating the imaging device utilizing the wireless communication and an imaging operation is to be performed. In this case, a user may have to perform work of attaching the imaging device to the information processing device. However, it is also assumed that the user accidentally touches an operation member of the information processing device or the imaging device during the work. In this case, it is assumed that the operation according to the operation member touched by the user is executed and the work may have to be interrupted.

The present technology is created in consideration of such a situation, and it is desirable to prevent a malfunction during work.

### [Solution to Problem]

According to one aspect of the present technology, there is presented an imaging device according to claim 1.

According to another aspect of the present technology, there is presented 2-a portable communication device according to claim 3.

According to yet another aspect of the present technology, there is presented a non-transitory computer readable medium according to claim 5.

Additionally, in each of the above aspects of the present technology, it may further be presented wherein the information acquiring control circuit is configured to prevent an operation of at least one of an input part, an output part, an operation member, and combinations thereof.

### Advantageous Effects of Invention

According to the present technology, an excellent effect of preventing a malfunction during work can be demonstrated. The effect described here is not necessarily limited and may be any effect described in the present disclosure.

### Brief Description of Drawings

FIG. 1 is a diagram illustrating an appearance configuration of an imaging device 100 in a first embodiment of the present technology.
FIG. 2 is a diagram illustrating an appearance configuration when attaching the imaging device 100 to an information processing device 200 in the first embodiment of the present technology.
FIG. 3 is a block diagram illustrating a functional configuration example of the imaging device 100 and the information processing device 200 in the first embodiment of the present technology.
FIG. 4 is a diagram illustrating a use example of the imaging device 100 and the information processing device 200 in the first embodiment of the present technology.
FIG. 5 is a diagram illustrating one example (user operation invalid period 300, 310) of a period of invalidating a user operation of the imaging device 100 and the information processing device 200 in the first embodiment of the present technology.
FIG. 6 is an appearance diagram illustrating the imaging device 100 and the information processing device 200 in the first embodiment of the present technology.
FIG. 7 is a flowchart illustrating one example of a processing procedure of attachment start detection processing by the information processing device 200 in the first embodiment of the present technology.
FIG. 8 is an appearance diagram illustrating the imaging device 100 and the information processing device 200 in the first embodiment of the present technology.
FIG. 9 is a flowchart illustrating one example of a processing procedure of attachment start detection processing by the information processing device 200 in the first embodiment of the present technology.
FIG. 10 is a flowchart illustrating one example of a processing procedure of attachment start detection processing by the imaging device 100 and the information processing device 200 in the first embodiment of the present technology.
FIG. 11 is a flowchart illustrating one example of a processing procedure of attachment end detection processing by the imaging device 100 and the information processing device 200 in the first embodiment of the present technology.
FIG. 12 is a flowchart illustrating one example of a processing procedure of attachment end detection processing by the imaging device 100 and the information processing device 200 in the first embodiment of the present technology.
FIG. 13 is a diagram illustrating one example of a display screen (specific pattern screen 400) displayed at an input/output part 240 of the information processing device 200 in the first embodiment of the present technology.
FIG. 14 is a flowchart illustrating one example of a processing procedure of attachment end detection processing by the imaging device 100 and the information processing device 200 in the first embodiment of the present technology.
FIG. 15 is a flowchart illustrating one example of a processing procedure of attachment end detection processing by the imaging device 100 and the information processing device 200 in the first embodiment of the present technology.
FIG. 16 is a diagram illustrating a transition example in the case of performing notification during a user operation invalid period by the imaging device 100 in the first embodiment of the present technology.
FIG. 17 is a diagram illustrating a transition example in the case of performing notification during a user operation invalid period by the information processing device 200 in the first embodiment of the present technology.
FIG. 18 is a flowchart illustrating one example of a processing procedure of operation member invalidation processing by the imaging device 100 in the first embodiment of the present technology.
FIG. 19 is a flowchart illustrating one example of a processing procedure of operation member invalidation processing by the information processing device 200 in the first embodiment of the present technology.
FIG. 20 is a flowchart illustrating one example of a processing procedure of operation member invalidation processing by the information processing device 200 in a second embodiment of the present technology.

### Description of Embodiments

Hereinafter, a mode of implementing the present technology (hereinafter, called an embodiment) will be described. Descriptions will be given in the following order.
1. First embodiment (an example of invalidating a user operation after attachment start of an imaging device and an information processing device is detected until attachment end is detected)
2. Second embodiment (an example of invalidating a user operation after detachment start of the imaging device and the information processing device is detected until detachment end is detected)

### <1. First Embodiment

### "Appearance Configuration Example of Imaging Device"

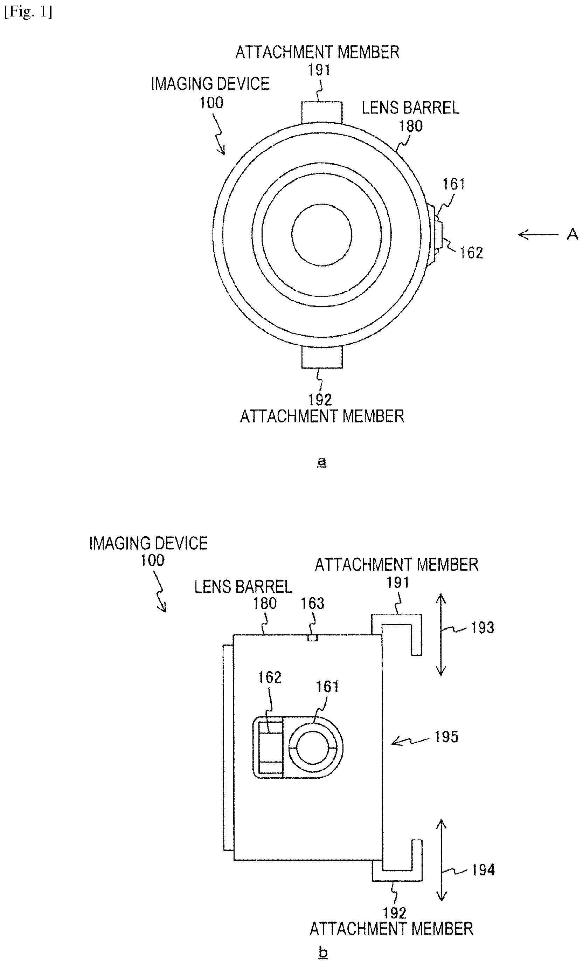

FIG. 1 is a diagram illustrating an appearance configuration of an imaging device 100 in the first embodiment of the present technology. A front view of the imaging device 100 is illustrated in FIG. 1a, and a side view (a side view in the case of view from an arrow A) of the imaging device 100 is illustrated in FIG. 1b.

Also, in the embodiment of the present technology, an example is illustrated in which the imaging device 100 is a cylindrical (columnar) imaging device (for instance, a lens style camera). That is, an example is illustrated in which the shape of the imaging device 100 is a shape of a lens part alone taken out of a general imaging device (for instance, an incorporated type camera). Also, the imaging device 100 is, for instance, embodied by a digital still camera or a digital video camera (for instance, a camera incorporated type recorder).

The imaging device 100 includes operation members 161-163, a display part 170, a lens barrel 180, and attachment members 191 and 192.

The lens barrel 180 houses individual members of an optical system and an imaging system or the like.

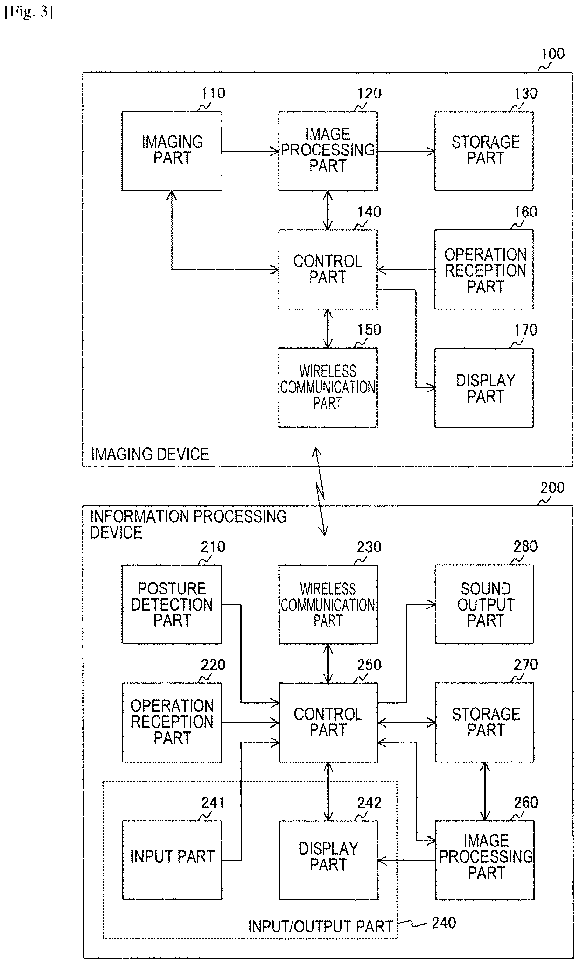

The operation members 161-163 are the operation members used when performing various kinds of operation input. For instance, the operation member 161 is the operation member (a shutter button (a shutter key)) used when performing a shutter operation (an operation for recording an image (image data) generated by an imaging part 110 (illustrated in FIG. 3) as image contents) of the imaging device 100. Also, the operation member 162 is the operation member (a zoom lever) used when performing a zoom operation of the imaging device 100. The operation member 163 is the operation member (a power button) used when performing ON/OFF operations of a power source of the imaging device 100.

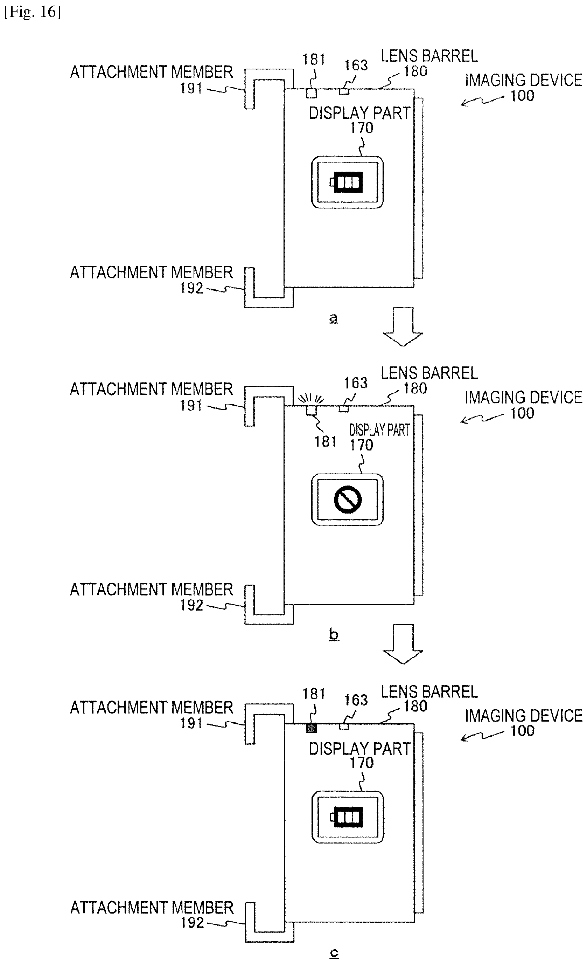

The display part 170 (illustrated in FIG. 16) displays various kinds of information. For instance, at the display part 170, individual pieces of information (for instance, information for confirming presence/absence of a recording medium, information for confirming a battery residual amount) related to the imaging device 100 are displayed. Display examples of the display part 170 are illustrated in FIG. 16.

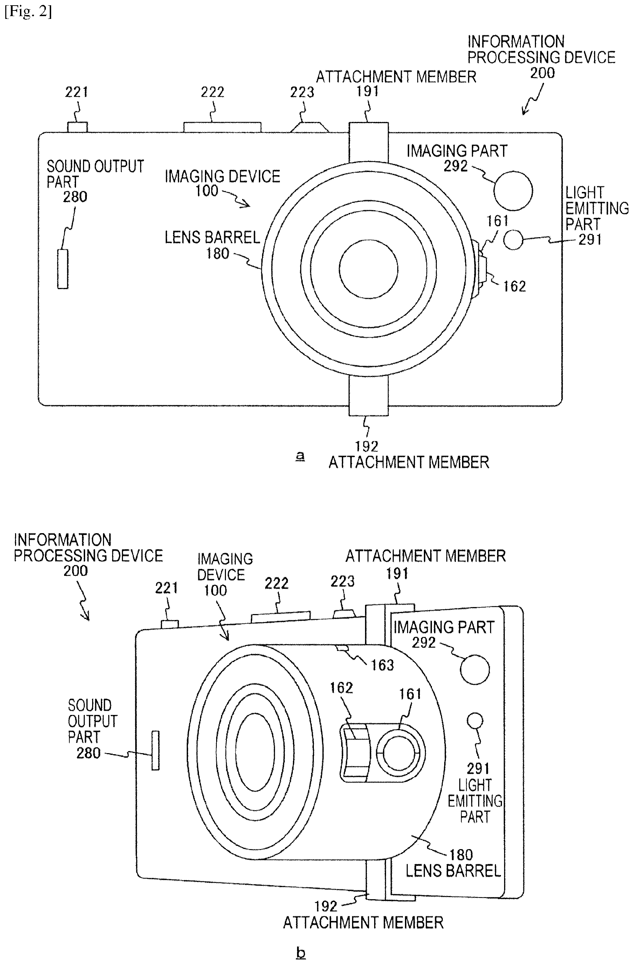

The attachment members 191 and 192 are attachments used when attaching the imaging device 100 to another device (for instance, an information processing device 200 illustrated in FIG. 2). For instance, by moving the attachment member 191 in a direction of an arrow 193 and moving the attachment member 192 in a direction of an arrow 194 corresponding to a shape and a size of another device, the imaging device 100 can be attached to the device. That is, the attachment members 191 and 192 are attachments for fixing the imaging device 100 to another device. Also, an attachment surface in the case of attaching the imaging device 100 to another device is illustrated as a mounting surface 195 (a surface on the opposite side of a surface on a lens side illustrated in FIG. 1a). Also, an example of the case of attaching the imaging device 100 to another device is illustrated in FIG. 2.

In this way, the imaging device 100 can, for instance, perform a normal imaging operation and be attached to another device (for instance, a smartphone) and used. Also, in the case of being attached to another device and used, the imaging device 100 can be operated by remote control using another device.

### "Attachment Example of Imaging Device"

FIG. 2 is a diagram illustrating an appearance configuration in the case of attaching the imaging device 100 to the information processing device 200 in the first embodiment of the present technology.

An example of the case of attaching the imaging device 100 to one surface (a surface provided with an imaging part 292) of the information processing device 200 is illustrated in FIG. 2a and FIG. 2b. In FIG. 2a, a front view in the case of attaching the imaging device 100 to the information processing device 200 is illustrated. Also, in FIG. 2b, a perspective view in the case of attaching the imaging device 100 to the information processing device 200 is illustrated.

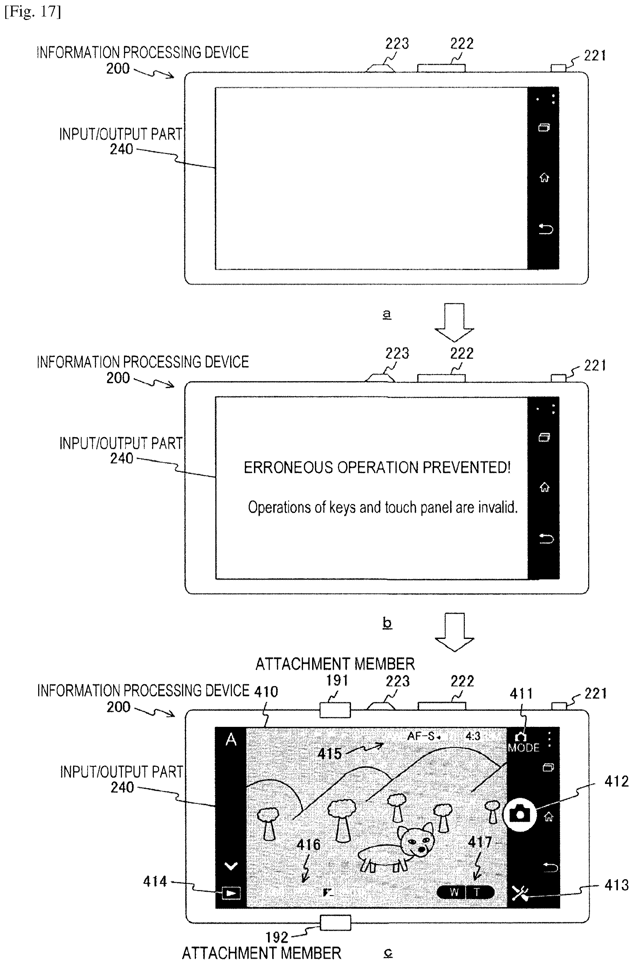

The information processing device 200 includes operation members 221-223, an input/output part 240 (illustrated in FIG. 3 and FIG. 17), a sound output part 280, a light emitting part 291, and the imaging part 292. Also, the information processing device 200 is embodied by an information processing device such as a smartphone, a tablet terminal, a content output device or a game device, for instance.

The operation members 221-223 are the operation members used when performing various kinds of operation input. For instance, the operation member 221 is the operation member (the shutter button (the shutter key)) used when performing a shutter operation (an operation for recording an image (image data) generated by the imaging part 292 as image contents) of the information processing device 200. Also, the operation member 222 is the operation member (a sound volume adjustment button (a sound volume bar)) used when performing an operation for adjusting a sound volume output from the sound output part 280. The operation member 223 is the operation member (the power button) used when performing ON/OFF operations of a power source of the information processing device 200.

The input/output part 240 displays various kinds of images, and receives the operation input from a user on the basis of the detected state of an object which is adjacent to or in contact with a display surface of the input/output part 240.

The sound output part 280 outputs various kinds of sound information.

The light emitting part 291 is a light emitting device which emits light to an object. The light emitting part 291 is used when performing an imaging operation using the information processing device 200 in an environment where it is difficult to expect sufficient brightness such as the nighttime or indoor, for instance.

The imaging part 292 images an object and generates an image (image data).

As illustrated in FIG. 2, by the attachment members 191 and 192 of the imaging device 100 holding a main body of the information processing device 200 between them, the imaging device 100 can be fixed to the information processing device 200. Also, the imaging device 100 may be attached to another part (a part other than the part illustrated in FIG. 2) in the information processing device 200.

"Functional Configuration Example of Imaging Device and Information Processing Device"

FIG. 3 is a block diagram illustrating a functional configuration example of the imaging device 100 and the information processing device 200 in the first embodiment of the present technology. Also, an imaging system constituted of the imaging device 100 and the information processing device 200 is one example of an imaging system described in the scope of claims.

### "Functional Configuration Example of Imaging Device"

The imaging device 100 includes the imaging part 110, an image processing part 120, a storage part 130, a control part 140, a wireless communication part 150, an operation reception part 160, and the display part 170.

The imaging part 110 images an object and generates an image (image data) on the basis of control of the control part 140, and outputs the generated image to the image processing part 120. The imaging part 110 is, for instance, constituted of an optical system (a plurality of lenses) and an imaging element. Also, individual parts (for instance, a zoom lens, a focus lens, a diaphragm) of the imaging part 110 are controlled under the control of the control part 140. In the embodiment of the present technology, it is assumed that a reference to "image" includes senses of both image itself and image data for displaying the image.

The image processing part 120 executes predetermined image processing (for instance, demosaic processing) for the image output from the imaging part 110 under the control of the control part 140, and the image subjected to the image processing is stored in the storage part 130. The image subjected to the image processing by the image processing part 120 may be transmitted to the information processing device 200 utilizing wireless communication and stored in a storage part 270.

The storage part 130 is a recording medium that stores the image subjected to the image processing by the image processing part 120 as contents (for instance, a still image file, a moving image file). The storage part 130 may be built in the imaging device 100 or may be attachable and detachable to/from the imaging device 100.

The control part 140 controls the individual parts in the imaging device 100 on the basis of a control program. For instance, the control part 140 controls the individual parts on the basis of the operation input received by the operation members such as the zoom lever (the operation member 162) or the shutter button (the operation member 161) provided in the imaging device 100. Also, the control part 140 controls the individual parts on the basis of control information from the information processing device 200 received through the wireless communication part 150. That is, the imaging device 100 can be remotely controlled using the information processing device 200.

Also, for instance, the control part 140 executes control of invalidating a user operation of at least one of the individual operation members provided in each of the individual devices after attachment start of the information processing device 200 and the imaging device 100 is detected until attachment end is detected. For instance, when the attachment start is detected for each of the information processing device 200 and the imaging device 100, the control part 140 executes the control of invalidating the user operation. For instance, the control part 140 executes the control of invalidating the user operation of at least one of a touch operation in the input/output part 240 of the information processing device 200, the operation members 221-223 of the information processing device 200, and the operation members 161-163 of the imaging device 100. In this case, the control part 140 executes control for notifying the user of the fact that the user operation is invalidated. This notification example is illustrated in FIG. 16. For instance, when the attachment end is detected, the control part 140 executes control for canceling the invalidation of the user operation.

The wireless communication part 150 transmits and receives individual pieces of information (for instance, control data, image data) to/from another information processing device (for instance, the information processing device 200) utilizing the wireless communication under the control of the control part 140.

Here, as the wireless communication, for instance, near field communication (NFC) or a wireless local area network (LAN) may be used. As the wireless LAN, for instance, wireless fidelity (Wi-Fi) may be used. Also, as the wireless communication, for instance, the wireless communication of Bluetooth (R), infrared rays, and portable radio waves or the like may be used.

Also, a plurality of wireless communication systems may be used. For instance, at the start of the wireless communication, only a power source is turned on and data (for instance, a service set identifier (SSID)) related to the Wi-Fi is exchanged by the NFC. Then, data is exchanged thereafter through the Wi-Fi.

Also, for instance, when detecting attachment of the imaging device 100 to the information processing device 200, exchange of data by the NFC may be used. Also, the image data and the control data can be exchanged between the imaging device 100 and the information processing device 200 utilizing the Wi-Fi.

The operation reception part 160 is the operation reception part that receives an operation performed by the user, and outputs control information (operation information) according to received operation contents to the control part 140. The operation reception part 160 corresponds to, for instance, the operation members 161-163 illustrated in FIG. 1.

The display part 170 displays various kinds of information. In the embodiment of the present technology, an example is illustrated in which the image (a live-view image) generated by the imaging part 110 is not displayed at the imaging device 100 and is displayed at the information processing device 200. Therefore, the display part 170 is a relatively small display panel or the like and is capable of performing simple display (for instance, display illustrated in FIG. 16a to FIG. 16c) only.

### "Functional Configuration Example of Information Processing Device"

The information processing device 200 includes a posture detection part 210, an operation reception part 220, a wireless communication part 230, the input/output part 240, a control part 250, an image processing part 260, the storage part 270, and the sound output part 280.

The posture detection part 210 detects change in a posture of the information processing device 200 by detecting an acceleration, movement and inclination or the like of the information processing device 200, and outputs posture information related to the detected change in the posture to the control part 250. As the posture detection part 210, for instance, various kinds of sensors such as a gyro sensor or an acceleration sensor may be used.

The operation reception part 220 is the operation reception part that receives the operation performed by the user, and outputs the control information (operation information) according to the received operation contents to the control part 250. The operation reception part 220 corresponds to, for instance, the operation members 221-223 illustrated in FIG. 2.

The wireless communication part 230 transmits and receives individual pieces of information (for instance, the control data, the image data) to/from another information processing device (for instance, the imaging device 100) utilizing the wireless communication under the control of the control part 250. As the wireless communication, for instance, the above described wireless LAN (for instance, the Wi-Fi), the NFC, Bluetooth, infrared rays or portable radio waves or the like may be used. Also, the plurality of wireless communication systems may be used.

For the input/output part 240, an input part 241 and a display part 242 are configured as one body. Also, the input/output part 240 displays various kinds of images on the display part 242 under the control of the control part 250, and receives the operation input from the user by the input part 241 on the basis of the detected state of an object which is adjacent to or in contact with a display surface of the display part 242. The input part 241 outputs the control information according to the received operation input to the control part 250.

For instance, as the input part 241, there may be used an electrostatic type (electrostatic capacity type) touch panel that detects contact or approach of a conductive object (for instance, a finger of a person) on the basis of change in electrostatic capacity. Also, for instance, as the display part 242, there may be used a display panel such as a liquid crystal display (LCD) or an organic electro luminescence (EL) panel. Then, the input/output part 240 is configured by superimposing a transparent touch panel on the display surface of the display panel, for instance.

For instance, the user can operate the information processing device 200 and the imaging device 100 by performing a contact operation (or an adjacent operation) of an operation object or the like displayed at the display part 242. Here, the operation object is displayed at the input/output part 240 like operation objects 411-417 illustrated in FIG. 17c, for instance, and is an operation button (a graphical user interface (GUI) button) or the like for performing the operation input.

The control part 250 controls the individual parts in the information processing device 200 on the basis of a control program. For instance, the control part 250 determines the posture of the information processing device 200 on the basis of the posture information from the posture detection part 210, and switches a display form of the display screen to be displayed at the input/output part 240 based on the determination result. For instance, the control part 250 determines a vertical direction of the posture of the information processing device 200 on the basis of the posture information from the posture detection part 210, and switches the vertical direction of the display screen to be displayed at the input/output part 240 on the basis of the determination result. Also, for instance, when the information processing device 200 and the imaging device 100 are connected through the wireless communication part 230, the control part 250 makes the display screen that displays various kinds of information related to the imaging device 100 be displayed at the input/output part 240.

Also, for instance, the control part 250 executes the control of invalidating the user operation of at least one of the individual operation members included in each of the individual devices after the attachment start of the information processing device 200 and the imaging device 100 is detected until the attachment end is detected. For instance, when the attachment start is detected for each of the information processing device 200 and the imaging device 100, the control part 250 executes the control of invalidating the user operation. For instance, the control part 250 executes the control of invalidating the user operation of at least one of the touch operation in the input/output part 240 of the information processing device 200, the operation members 221-223 of the information processing device 200, and the operation members 161-163 of the imaging device 100. In this case, the control part 250 executes the control for notifying the user of the fact that the user operation is invalidated. This notification example is illustrated in FIG. 17. Also, for instance, when the attachment end is detected, the control part 250 executes the control for canceling the invalidation of the user operation.

The image processing part 260 executes predetermined image processing for the image generated by the imaging device 100 and the image generated by the imaging part 292 (illustrated in FIG. 2a and FIG. 2b) under the control of the control part 250, and makes the display part 242 display the image subjected to the image processing. Also, the image processing part 260 stores the images in the storage part 270 under the control of the control part 250. Also, the image processing part 260 makes the display part 242 display the display screen to be used when the imaging operation using the imaging device 100 is being performed, under the control of the control part 250.

The storage part 270 is a recording medium that stores individual pieces of information under the control of the control part 250. For instance, in the storage part 270, the image generated by the imaging device 100 and the image generated by the imaging part 292 (illustrated in FIG. 2a and FIG. 2b) are stored as contents (for instance, the still image file, the moving image file). The storage part 270 may be built in the information processing device 200 or may be attachable and detachable to/from the information processing device 200.

The sound output part 280 outputs sound information under the control of the control part 250. The sound output part 280 can be embodied by a speaker, for instance.

### "Use Example of Imaging Device and Information Processing Device"

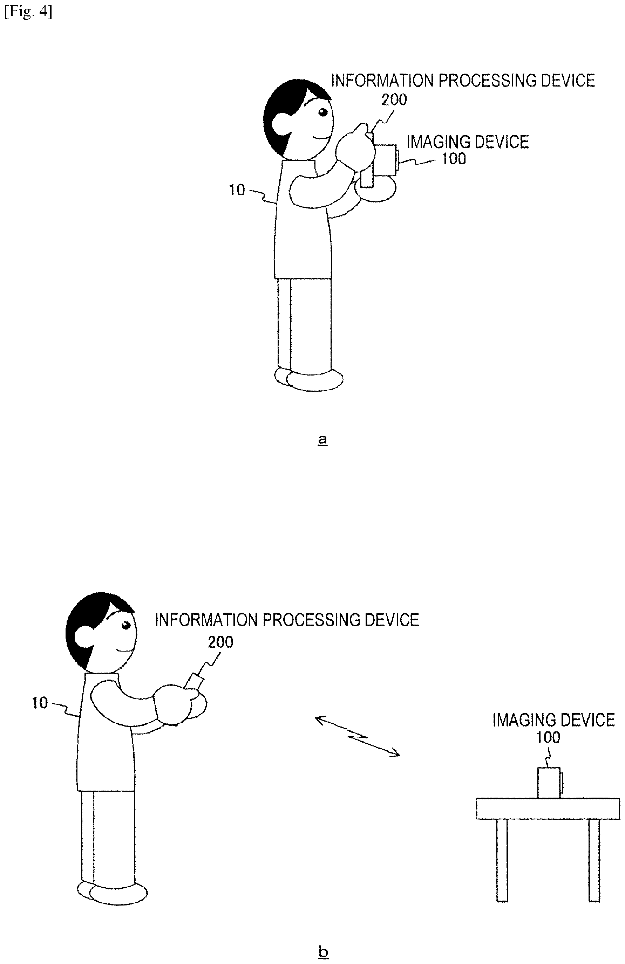

FIG. 4 is a diagram illustrating a use example of the imaging device 100 and the information processing device 200 in the first embodiment of the present technology.

In FIG. 4a, one example of the case of attaching the imaging device 100 to the information processing device 200 and using the imaging device 100 is illustrated. For instance, as illustrated in FIG. 2a and FIG. 2b, the imaging device 100 can be attached to one surface (a surface on the opposite side of a surface provided with the input/ output part 240) of the information processing device 200. In this case, a user 10 can perform imaging almost similarly to imaging using a general imaging device (for instance, the incorporated type camera), by using the information processing device 200 to which the imaging device 100 is attached.

In FIG. 4b, one example of the case of using the imaging device 100 without attaching the imaging device 100 to the information processing device 200 is illustrated. For instance, as illustrated in FIG. 4b, the imaging device 100 can be installed at a location away from the information processing device 200. Even in this case, since the user 10 can remotely control the imaging device 100 using the information processing device 200, imaging using the imaging device 100 and the information processing device 200 can be performed.

In this way, when the user 10 performs imaging using the imaging device 100 and the information processing device 200, the case of attaching the imaging device 100 to the information processing device 200 and using the imaging device 100 and the case of using the imaging device 100 without attaching the imaging device 100 to the information processing device 200 are assumed. Therefore, for instance, the user 10 is assumed to attach the imaging device 100 to the information processing device 200, use the imaging device 100, then detach the imaging device 100 from the information processing device 200, and use the imaging device 100. Also, for instance, the user 10 is assumed to detach the imaging device 100 from the information processing device 200, use the imaging device 100, then attach the imaging device 100 to the information processing device 200, and use the imaging device 100.

In this way, in the case of performing the work of attaching the imaging device 100 to the information processing device 200 and the case of performing the work of detaching the imaging device 100 from the information processing device 200, it is also assumed that the operation members of the individual devices are accidentally touched during the work. In this case, there is a risk that a function corresponding to the accidentally touched operation member is activated and the individual devices start the operation not intended by the user.

Then, the first embodiment of the present technology illustrates an example of invalidating the user operation of the operation members of the individual devices after the attachment start of the imaging device 100 and the information processing device 200 is detected until the attachment end is detected. Also, a second embodiment of the present technology illustrates an example of invalidating the user operation of the operation members of the individual devices after the detachment start of the imaging device 100 and the information processing device 200 is detected until the detachment end is detected. Thus, an erroneous operation can be prevented after the attachment start of the imaging device 100 and the information processing device 200 is detected until the attachment end is detected, or after the detachment start is detected until the detachment end is detected. Thus, the malfunction during work can be prevented.

Also, in the embodiment of the present technology, the invalidation of the user operation of the operation member includes meanings of not receiving the user operation of the operation member, invalidating the reception of the operation member and not receiving the operation member or the like.

### "User Operation Invalid Period Example"

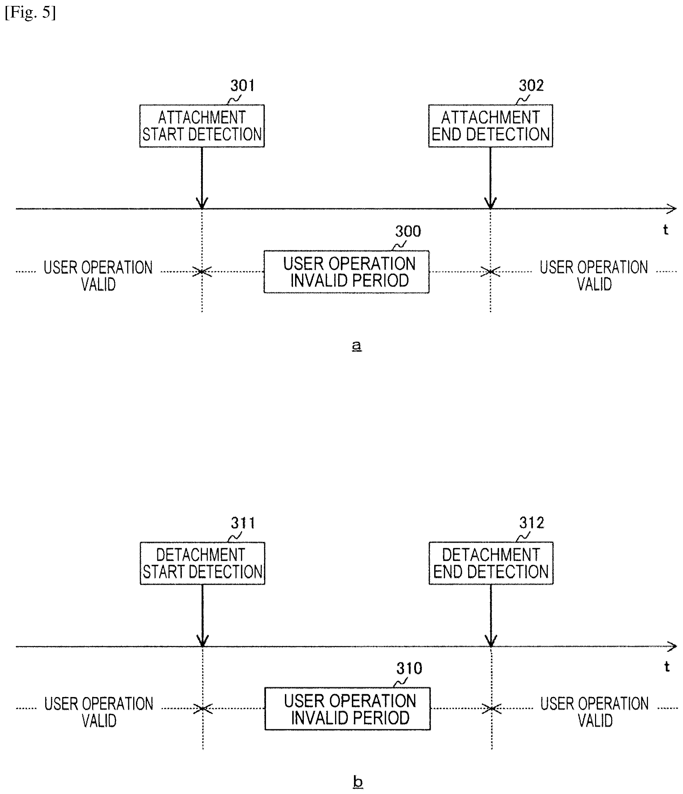

FIG. 5 is a diagram illustrating one example (user operation invalid period 300, 310) of a period of invalidating the user operation of the imaging device 100 and the information processing device 200 in the first embodiment of the present technology.

In FIG. 5a, the user operation invalid period 300 in the case of performing attachment work of the imaging device 100 and the information processing device 200 is illustrated.

For instance, at a timing (an attachment start timing) of detecting the attachment start of the imaging device 100 to the information processing device 200 (301), the control of invalidating the user operation of the individual operation members is executed in each of the imaging device 100 and the information processing device 200.

Also, for instance, at a timing (an attachment end timing) of detecting the attachment end of the imaging device 100 to the information processing device 200 (302), the control of validating the user operation of the individual operation members is executed in each of the imaging device 100 and the information processing device 200. That is, the control for canceling the invalidation of the user operation of the individual operation members is executed.

Here, the attachment start timing can be the point of time of detecting the attachment start of the imaging device 100 to the information processing device 200. Also, the attachment start timing may be a timing before or after the point of time of detecting the attachment start of the imaging device 100 to the information processing device 200 (for instance, a range of 0.01 second before or after the point of time).

Similarly, the attachment end timing can be the point of time of detecting the attachment end of the imaging device 100 to the information processing device 200. Also, the attachment end timing may be a timing before or after the point of time of detecting the attachment end of the imaging device 100 to the information processing device 200 (for instance, a range of 0.01 second before or after the point of time).

In FIG. 5b, the user operation invalid period 310 in the case of performing detachment work of the imaging device 100 and the information processing device 200 is illustrated.

For instance, at a timing (a detachment start timing) of detecting the detachment start of the imaging device 100 and the information processing device 200 (311), the control of invalidating the user operation of the individual operation members is executed in each of the imaging device 100 and the information processing device 200.

Also, for instance, at a timing (a detachment end timing) of detecting the detachment end of the imaging device 100 and the information processing device 200 (312), the control of validating the user operation of the individual operation members is executed in each of the imaging device 100 and the information processing device 200. That is, the control for canceling the invalidation of the user operation of the individual operation members is executed.

Here, the detachment start timing can be the point of time of detecting the detachment start of the imaging device 100 and the information processing device 200. Also, the detachment start timing may be a timing before or after the point of time of detecting the detachment start of the imaging device 100 and the information processing device 200 (for instance, a range of 0.01 second before or after the point of time).

Similarly, the detachment end timing can be the point of time of detecting the detachment end of the imaging device 100 and the information processing device 200. Also, the detachment end timing may be a timing before or after the point of time of detecting the detachment end of the imaging device 100 and the information processing device 200 (for instance, a range of 0.01 second before or after the point of time).

In this way, in the first embodiment of the present technology, the user operation is invalidated in each of the imaging device 100 and the information processing device 200, in the period (the user operation invalid period 300) from the attachment start timing to the attachment end timing. Hereinafter, detection examples of the attachment start timing and the attachment end timing will be illustrated.

### "Detection Example of Attachment Start of Imaging Device to Information Processing Device"

First, a method of detecting the attachment start of the imaging device 100 to the information processing device 200 will be described.

### "Example of Detecting Attachment Start Using Short-Range Wireless Communication"

For instance, the attachment start of the imaging device 100 to the information processing device 200 can be detected using short-range wireless communication. Here, an example using the near field communication (NFC) as the short-range wireless communication is illustrated.

For instance, in the NFC, periodical communication is performed between the devices. For instance, a polling command is issued periodically from the information processing device 200. The polling command is a command for discriminating an NFC tag determined by an NFC standard (for instance, see NFC Forum Type3 Tag Operation Specification NFC Forum-TS-Type-3-Tag_1.1).

For instance, when there is a response (polling response) to the periodically issued polling command, the information processing device 200 can determine that an adjacent device exists. Here, a distance at which data communication utilizing the NFC is possible is about several centimeters (for instance, 1 to 10 cm). Accordingly, when there is the polling response, the control part 250 of the information processing device 200 can determine that the attachment of the imaging device 100 to the information processing device 200 is started.

Also, when there is no response (polling response) to the polling command, the information processing device 200 can determine that an adjacent device does not exist. In this case, the control part 250 of the information processing device 200 can determine that the attachment of the imaging device 100 to the information processing device 200 is not started.

Here, the NFC is widely spread. Also, the NFC is often loaded on an information processing device such as a smartphone. Therefore, in the case of the information processing device loaded with the NFC, by detecting the attachment start using the NFC, hardware may not necessarily be newly provided for performing the detection. Thus, a manufacturing cost of the information processing device can be reduced.

Here, for instance, the case that the attachment of the imaging device to the information processing device is not started and the imaging device and the information processing device are adjacent is also assumed. In such a case, when the attachment start is detected utilizing the short-range wireless communication other than the NFC, there is a risk of accidentally detecting that the attachment of the imaging device to the information processing device is started. Then, in the embodiment of the present technology, the NFC is utilized as the short-range wireless communication. Thus, detection accuracy of the attachment start can be improved.

### "Example of Detecting Attachment Start Using Check Command And Check Response"

Above, the example of detecting the attachment start using the NFC is illustrated. In this way, in the case of detecting the attachment start using the NFC, the attachment start may be detected using a check command and a check response.

For instance, the check command and the check response are exchanged, and when specifying information is included in the check response, it can be determined that the attachment of the imaging device 100 to the information processing device 200 is started. Here, the specifying information is information (identification information) for specifying the imaging device 100. Also, the check command and the check response are commands for reading contents of an NFC tag. The command is defined in NFC Forum Type3 Tag Operation Specification.

For instance, as described above, the polling command is issued and a response (polling response) to the polling command is exchanged.

Then, when the polling response is received, the control part 250 of the information processing device 200 transmits the check command. When the check command is received, the control part 140 of the imaging device 100 transmits a response (check response) to the check command. In this case, the control part 140 of the imaging device 100 includes the specifying information (the information (identification information) for specifying the imaging device 100) in the check response and transmits it.

For instance, information indicating "ABC DSC/Lens-Style Camera" can be included in the check response and transmitted as the specifying information. Here, for instance, it is assumed that "ABC" is information indicating a name of a company which manufactures the imaging device 100, and "DSC" is information indicating that it is the imaging device. Also, it is assumed that "Lens-Style Camera" is information indicating that it is a lens style camera.

In this way, the control part 140 of the imaging device 100 includes the specifying information in the check response and transmits it. Thus, the information processing device 200 which receives the check response can recognize that the device which has transmitted the check response is the imaging device 100 on the basis of the specifying information included in the check response. That is, it can be recognized that the device which has transmitted the check response is the lens style camera (the imaging device 100) made by the company "ABC".

When the check response is received, the control part 250 of the information processing device 200 acquires contents of the check response. Subsequently, the control part 250 of the information processing device 200 determines whether or not the specifying information is included in the check response. Then, in the case that the specifying information is included in the check response, the control part 250 of the information processing device 200 determines that the attachment of the imaging device 100 to the information processing device 200 is started. On the other hand, in the case that the specifying information is not included in the check response, the control part 250 of the information processing device 200 determines that the attachment of the imaging device 100 to the information processing device 200 is not started.

"Example of Detecting Attachment Start Using Reception Radio Field Intensity" For instance, a distance between the imaging device 100 and the information processing device 200 can be estimated using reception radio field intensity. For instance, a table indicating relationship between the reception radio field intensity and the distance is prepared, and stored in the storage part 270. Then, the control part 250 of the information processing device 200 acquires the distance corresponding to the reception radio field intensity acquired by the wireless communication part 230 from the table, and can use the distance as the distance between the imaging device 100 and the information processing device 200. Also, when the distance acquired from the table is shorter than a threshold (for instance, 1 to 10 cm), the control part 250 of the information processing device 200 determines that the attachment of the imaging device 100 to the information processing device 200 is started.

Also, the distance between the imaging device 100 and the information processing device 200 may be detected using another sensor. For instance, a distance sensor (for instance, a sensor which detects the distance using infrared rays or ultrasonic waves) may be used. Also, for instance, the distance between the imaging device 100 and the information processing device 200 may be detected using a global positioning system (GPS). For instance, respective positions of the imaging device 100 and the information processing device 200 are acquired using the GPS, and the distance between the imaging device 100 and the information processing device 200 can be calculated on the basis of these positions. Also, when the calculated distance is shorter than the threshold (for instance, 1 to 10 cm), the control part 250 of the information processing device 200 determines that the attachment of the imaging device 100 to the information processing device 200 is started.

Above, the example that the control part 250 of the information processing device 200 detects the attachment start of the imaging device 100 to the information processing device 200 is illustrated. Detection can be similarly performed in the case that the control part 140 of the imaging device 100 detects the attachment start of the imaging device 100 to the information processing device 200 as well.

### "Example of Using Member for Detecting Attachment Start"

For instance, using a member for detecting the attachment start of the imaging device 100 to the information processing device 200, the attachment start can be detected. As the member, for instance, at least one of the imaging device 100 and the information processing device 200 can include an attachment start button.

### "Example of Providing Attachment Start Button Only in One Device"

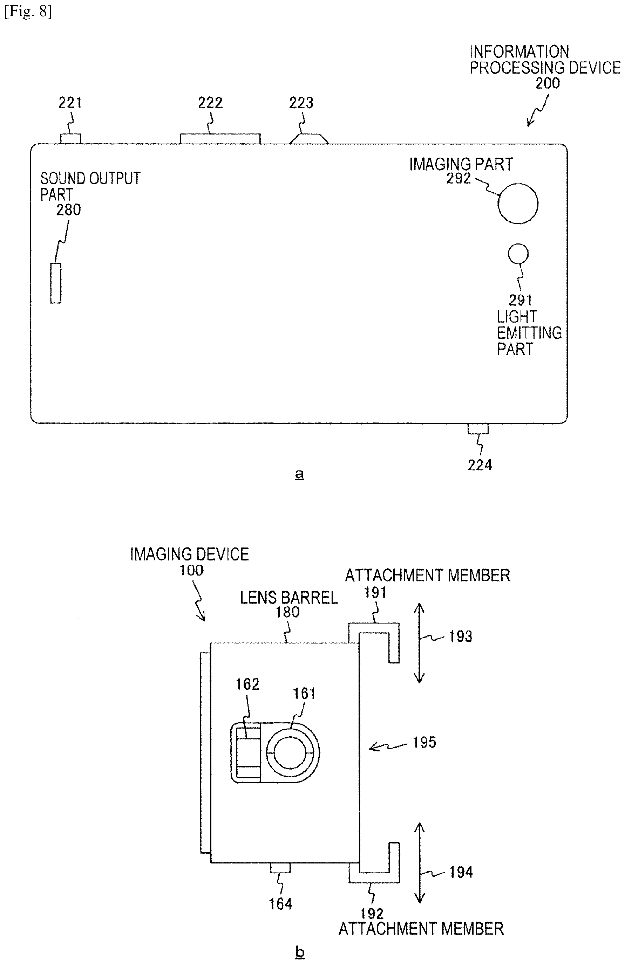

For instance, the case of providing the attachment start button (for instance, an operation member 164 illustrated in FIG. 8b) only in the imaging device 100 is assumed. In this case, when starting the attachment of the imaging device 100 to the information processing device 200, the user presses the attachment start button. In this way, when the attachment start button is pressed, information indicating that the attachment of the imaging device 100 to the information processing device 200 is started is output to the control part 140. Then, in the case of acquiring the information indicating that the attachment is started, the control part 140 can detect the attachment start of the imaging device 100 to the information processing device 200. Also, the control part 140 transmits that effect through the wireless communication part 150 to the information processing device 200. Thus, the control part 250 of the information processing device 200 can detect the attachment start of the imaging device 100 to the information processing device 200.

Also, for instance, the case of providing the attachment start button (for instance, an operation member 224 illustrated in FIG. 8a) only in the information processing device 200 is assumed. Similarly in this case, the user presses the attachment start button when starting the attachment of the imaging device 100 to the information processing device 200. In this way, when the attachment start button is pressed, the information indicating that the attachment of the imaging device 100 to the information processing device 200 is started is output to the control part 250. Then, in the case of acquiring the information indicating that the attachment is started, the control part 250 can detect the attachment start of the imaging device 100 to the information processing device 200. Also, the control part 250 transmits that effect through the wireless communication part 230 to the imaging device 100. Thus, the control part 140 of the imaging device 100 can detect the attachment start of the imaging device 100 to the information processing device 200.

### "Example of Providing Attachment Start Button in Both Devices"

For instance, the case of providing the attachment start button in both of the imaging device 100 and the information processing device 200 is assumed. In this case, the user presses the respective attachment start buttons when starting the attachment of the imaging device 100 to the information processing device 200. In this way, when the attachment start button of the imaging device 100 is pressed, the information indicating that the attachment of the imaging device 100 to the information processing device 200 is started is output to the control part 140. Then, in the case of acquiring the information indicating that the attachment is started, the control part 140 can detect the attachment start of the imaging device 100 to the information processing device 200. Similarly, when the attachment start button of the information processing device 200 is pressed, the information indicating that the attachment of the imaging device 100 to the information processing device 200 is started is output to the control part 250. Then, in the case of acquiring the information indicating that the attachment is started, the control part 250 can detect the attachment start of the imaging device 100 to the information processing device 200. In this way, when the attachment start button is provided in both of the imaging device 100 and the information processing device 200, the attachment start of the imaging device 100 to the information processing device 200 can be detected inside the individual devices.

Even in the case of providing the attachment start button in both of the imaging device 100 and the information processing device 200, exchange may be performed to inquire whether or not the attachment start button is pressed in the other device and the attachment start may be detected on the basis of the inquiry result. That is, it may be detected that the attachment is started on condition that the attachment start button is pressed in both devices.

Also, another operation member may be used without providing the attachment start button as a member for detecting the attachment start. For instance, the shutter button or the touch panel (input/output part 240) or the like provided in the imaging device 100 and the information processing device 200 may be used. For instance. A predetermined operation (for instance, three times of pressing operations in one second) of the shutter button of the information processing device 200 can be an operation for detecting the attachment start of the information processing device 200. Also, for instance, the attachment start button is displayed at the input/output part 240 of the information processing device 200 and the pressing operation of the attachment start button can be the operation for detecting the attachment start of the information processing device 200. Also, for instance, an operation object (icon) for activating an application of the imaging device 100 is displayed at the input/output part 240 of the information processing device 200, and the pressing operation of the operation object can be the operation for detecting the attachment start of the information processing device 200. Also, a complicated operation may be a condition. For instance, the operation of performing the pressing operation of a predetermined button at the input/ output part 240 of the information processing device 200 and then performing the predetermined operation (for instance, three times of the pressing operations in one second) of the shutter button can be the operation for detecting the attachment start of the information processing device 200.

Also, for instance, a switch to be pressed when attached to the other device is provided on the attachment members 191 and 192 of the imaging device 100, and the switch can be used as the member for detecting the attachment start. For instance, when the attachment of the imaging device 100 to the information processing device 200 is started, since the switch provided on the attachment members 191 and 192 is pressed, the attachment start can be detected.

The above-described methods of detecting the attachment start are examples, and other detection methods may be used without being limited to these methods.

### "Operation Example When Detecting Attachment Start Using NFC"

Here, an operation example of detecting the attachment start using the NFC as the short-range wireless communication will be described.

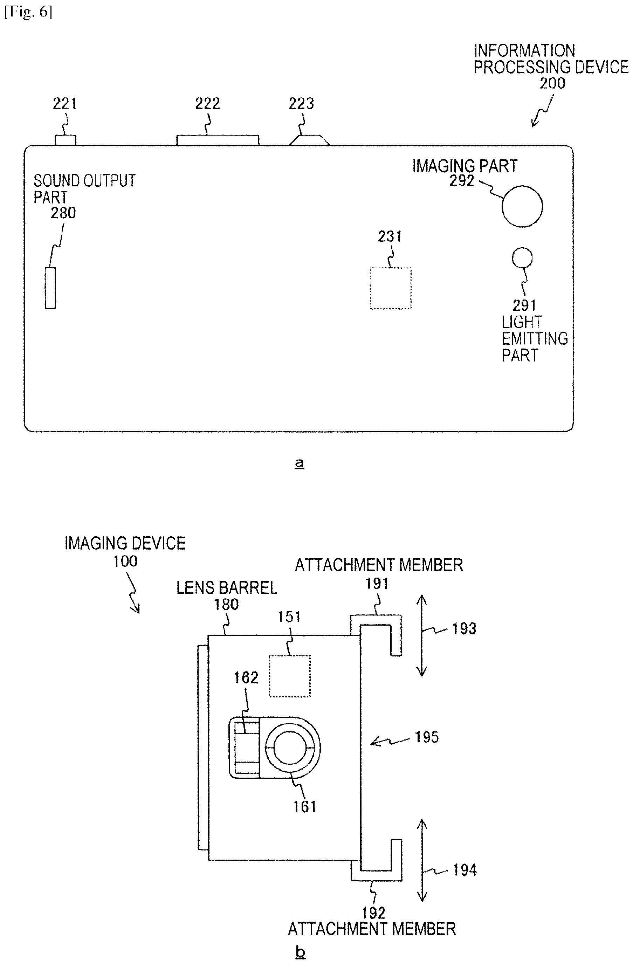

FIG. 6 is an appearance diagram illustrating the imaging device 100 and the information processing device 200 in the first embodiment of the present technology. An appearance of the information processing device 200 is illustrated in FIG. 6a, and an appearance of the imaging device 100 is illustrated in FIG. 6b.

For the information processing device 200 illustrated in FIG. 6a, it is assumed that an antenna for performing the NFC is provided in a part surrounded by a dotted-line rectangle 231 in the information processing device 200 illustrated in FIG. 2a and FIG. 2b. Also, for the imaging device 100 illustrated in FIG. 6b, it is assumed that an antenna for performing the NFC is provided in a part surrounded by a dotted-line rectangle 151 in the imaging device 100 illustrated in FIG. 1a and FIG. 1b.

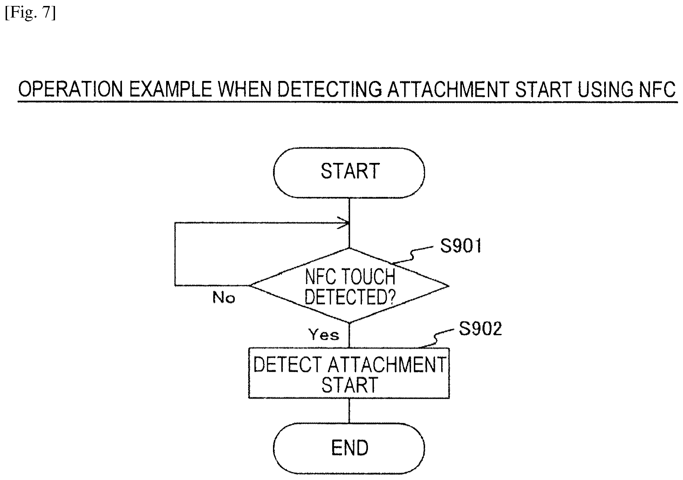

As described above, the distance at which data communication utilizing the NFC is possible is several centimeters (for instance, 1 to 10 cm). Therefore, in order to perform the data communication utilizing the NFC between the imaging device 100 and the information processing device 200, the user has to bring the antenna part of the imaging device 100 and the antenna part of the information processing device 200 into contact (or adjacent). That is, it is necessary that the antenna part (the part surrounded by the dotted-line rectangle 151) of the imaging device 100 illustrated in FIG. 6b and the antenna part (the part surrounded by the dotted-line rectangle 231) of the information processing device 200 illustrated in FIG. 6a be in contact (or adjacent). In FIG. 7, the contact operation (or, the adjacent operation) is called an NFC touch and described.

FIG. 7 is a flowchart illustrating one example of a processing procedure of attachment start detection processing by the information processing device 200 in the first embodiment of the present technology.

First, the control part 250 determines whether or not the NFC touch of the imaging device 100 is detected (step S901). Then, when the NFC touch of the imaging device 100 is not detected (step S901), monitoring is continuously performed.

Also, when the NFC touch of the imaging device 100 is detected (step S901), the control part 250 determines that the attachment of the imaging device 100 to the information processing device 200 is started (step S902). That is, by detecting the NFC touch of the imaging device 100, the attachment start of the imaging device 100 to the information processing device 200 is detected.

While the processing procedure of the attachment start detection processing by the information processing device 200 is illustrated in FIG. 7, the processing procedure of the attachment start detection processing by the imaging device 100 is the same.

### "Operation Example When Detecting Attachment Start Using Attachment Start Button"

Here, an operation example of detecting the attachment start using the attachment start button will be described.

FIG. 8 is an appearance diagram illustrating the imaging device 100 and the information processing device 200 in the first embodiment of the present technology. An appearance of the information processing device 200 is illustrated in FIG. 8a, and an appearance of the imaging device 100 is illustrated in FIG. 8b.

For the information processing device 200 illustrated in FIG. 8a, it is assumed that the operation member 224 as the attachment start button is provided in the information processing device 200 illustrated in FIG. 2a and FIG. 2b. Also, for the imaging device 100 illustrated in FIG. 8b, it is assumed that the operation member 164 as the attachment start button is provided in the imaging device 100 illustrated in FIG. 1a and FIG. 1b.

An attaching position of the operation member 224 illustrated in FIG. 8a is an example and the operation member 224 may be provided on another position in the information processing device 200. Also, an attaching position of the operation member 164 shown in FIG. 8b is an example and the operation member 164 may be provided on another position in the imaging device 100.

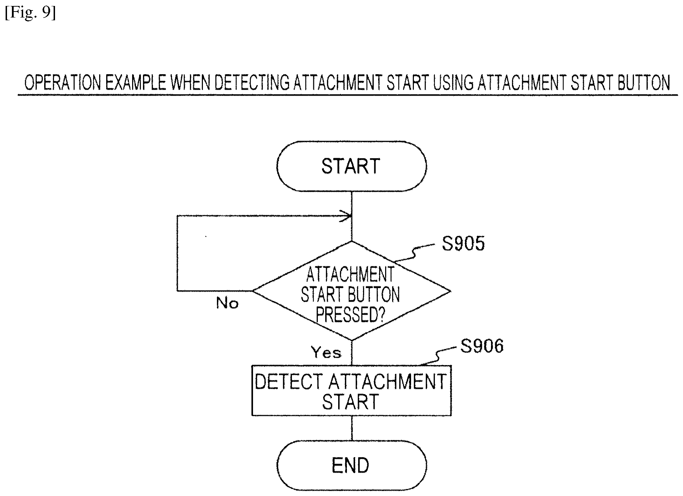

FIG. 9 is a flowchart illustrating one example of the processing procedure of the attachment start detection processing by the information processing device 200 in the first embodiment of the present technology.

First, the control part 250 determines whether or not the operation member 224 is pressed (step S905). Then, when the operation member 224 is not pressed (step S905), monitoring is continuously performed.

When the operation member 224 is pressed (step S905), the control part 250 determines that the attachment of the imaging device 100 to the information processing device 200 is started (step S906). That is, by the pressing of the operation member 224, the attachment start of the imaging device 100 to the information processing device 200 is detected.

While the processing procedure of the attachment start detection processing by the information processing device 200 is illustrated in FIG. 9, the processing procedure of the attachment start detection processing by the imaging device 100 (the attachment start detection processing using the operation member 164) is the same.

In this way, the control part 250 of the information processing device 200 can detect the attachment start on the basis of at least one of the operation input using the operation member, the detection of the adjacent device using the short-range wireless communication and the detection of the adjacent device using the reception radio field intensity. Also, the control part 140 of the imaging device 100 can detect the attachment start on the basis of at least one of the operation input using the operation member, the detection of the adjacent device using the short-range wireless communication and the detection of the adjacent device using the reception radio field intensity.

### "Operation Example When Detecting Attachment Start by One Device And Notifying That Effect to the Other Device"

Above, the examples that each of the individual devices detects the attachment start are illustrated. However, for instance, only one device may detect the attachment start and notify that effect to the other device. Thus, the other device may not have a function for detecting the attachment start.

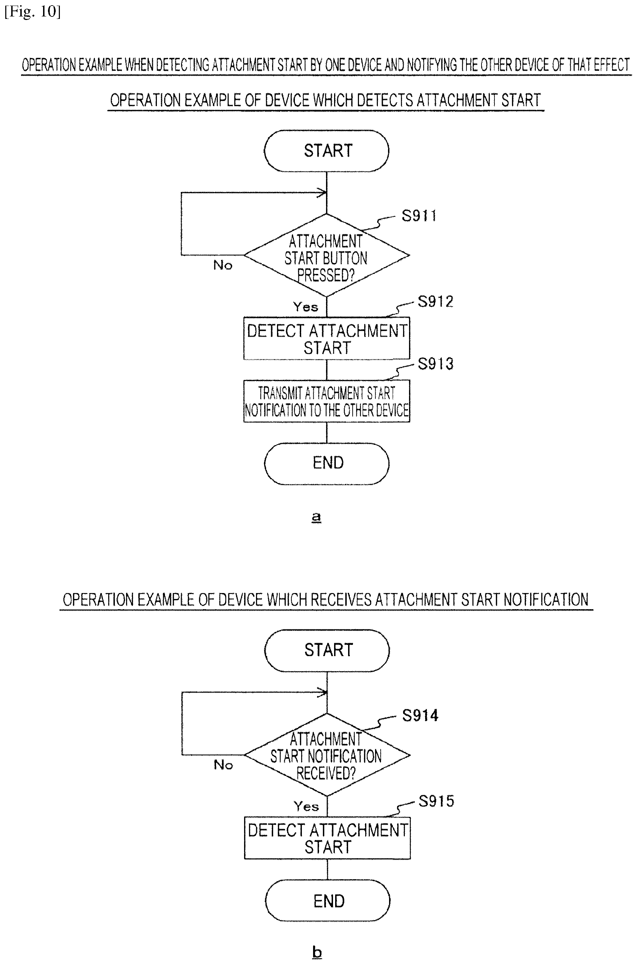

FIG. 10 is a flowchart illustrating one example of the processing procedure of the attachment start detection processing by the imaging device 100 and the information processing device 200 in the first embodiment of the present technology. FIG. 10 illustrates an operation example in the case of a state that the wireless communication between the imaging device 100 and the information processing device 200 is possible.

An operation example of a device which detects the attachment start is illustrated in FIG. 10a. In this example, an example that the device which detects the attachment start is the information processing device 200 is illustrated. Also, in this example, the operation example in the case of detecting the attachment start using the attachment start button (for instance, the operation member 224 illustrated in FIG. 8a) is illustrated.

Since each processing in steps S911 and S912 corresponds to each processing in steps S905 and S906 illustrated in FIG. 9, descriptions are omitted here.

When the attachment start of the imaging device 100 to the information processing device 200 is detected (step S912), the control part 250 transmits information (attachment start notification) for notifying that the attachment start is detected to the imaging device 100 (step S913).

An operation example of a device which receives the attachment start notification is illustrated in FIG. 10b. In this example, an example that the device which receives the attachment start notification is the imaging device 100 is illustrated.

First, the control part 140 determines whether or not the attachment start notification is received (step S914). Then, when the attachment start notification is not received (step S914), monitoring is continuously performed.

Also, when the attachment start notification is received (step S914), the control part 140 determines that the attachment of the imaging device 100 to the information processing device 200 is started (step S915). That is, by receiving the attachment start notification, the attachment start of the imaging device 100 to the information processing device 200 is detected.

In this way, when the attachment start is detected, the control part 250 of the information processing device 200 executes control for transmitting the notification information (the attachment start notification) notifying that the attachment start is detected to the imaging device 100. Also, when the attachment start is detected, the control part 250 of the information processing device 200 executes the control of invalidating the user operation of at least one of the individual operation members provided in the information processing device 200. Also, when the notification information (the attachment start notification) is received, the control part 140 of the imaging device 100 executes the control of invalidating the user operation of at least one of the individual operation members provided in the imaging device 100.

Similarly, when the attachment start is detected, the control part 140 of the imaging device 100 executes the control for transmitting the notification information (the attachment start notification) notifying that the attachment start is detected to the information processing device 200. Also, when the attachment start is detected, the control part 140 of the imaging device 100 executes the control of invalidating the user operation of at least one of the individual operation members provided in the imaging device 100. Also, when the notification information (the attachment start notification) is received, the control part 250 of the information processing device 200 executes the control of invalidating the user operation of at least one of the individual operation members provided in the information processing device 200.

Also, the control part 250 of the information processing device 200 can detect the attachment start on the basis of at least one of the above-described individual detection (the detection using the operation member, the short-range wireless communication and the reception radio field intensity) and the attachment start notification from the imaging device 100. Similarly, the control part 140 of the imaging device 100 can detect the attachment start on the basis of at least one of the above-described individual detection (the detection using the operation member, the short-range wireless communication and the reception radio field intensity) and the attachment start notification from the information processing device 200.

### "Detection Example of Attachment End of Imaging Device to Information Processing Device"

Next, a method of detecting the attachment end of the imaging device 100 to the information processing device 200 will be described.

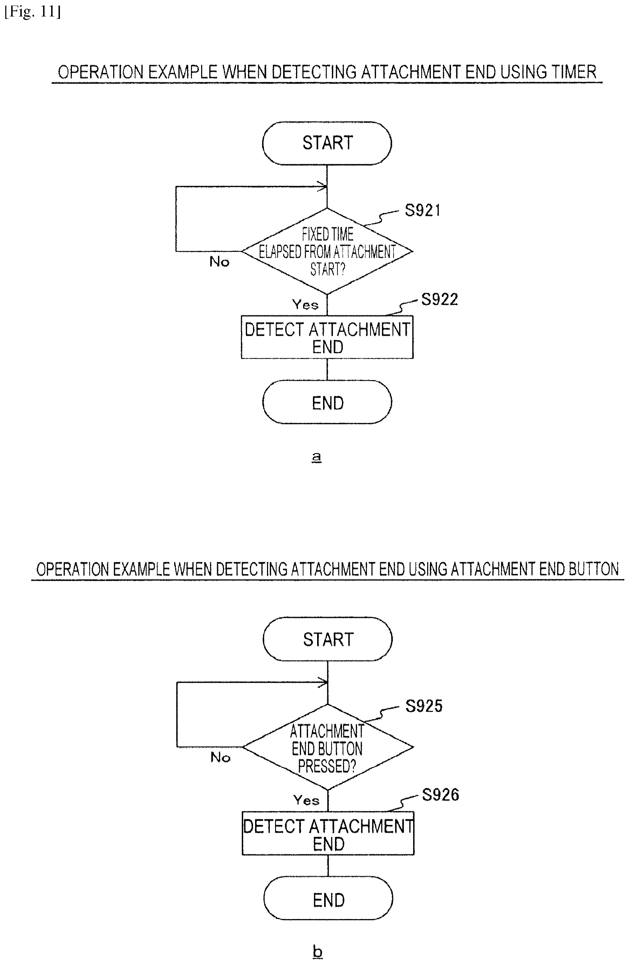

FIG. 11 is a flowchart illustrating one example of the processing procedure of attachment end detection processing by the imaging device 100 and the information processing device 200 in the first embodiment of the present technology.

An operation example in the case of detecting the attachment end using a timer is illustrated in FIG. 11a. In this example, the operation example by the information processing device 200 is illustrated. An operation example in the case of detecting the attachment end using an attachment end button is illustrated in FIG. 11b. In this example, the operation example by the information processing device 200 is illustrated.

### "Operation Example When Detecting Attachment End Using Timer"

Here, the operation example of detecting the attachment end using the timer will be described.

For instance, since the attachment of the imaging device 100 to the information processing device 200 is relatively simple work, it is assumed that the attachment work is to be ended within fixed time after the attachment is started. Accordingly, after the fixed time elapses after the attachment start of the imaging device 100 to the information processing device 200 is detected, the attachment end can be estimated. Here, the fixed time can be, for instance, about 5 to 30 seconds. Preferably, for instance, the fixed time can be about 10 seconds. The fixed time for detecting the attachment end may be set beforehand for each device or may be set according to user's preference.

Next, the operation example in the case of detecting the attachment end using the timer will be described with reference to FIG. 11a.

First, the control part 250 determines whether or not the fixed time has elapsed after the attachment start is detected (step S921). Then, when the fixed time has not elapsed after the attachment start is detected (step S921), monitoring is continuously performed.

When the fixed time has elapsed after the attachment start is detected (step S921), the control part 250 determines that the attachment of the imaging device 100 to the information processing device 200 is ended (step S922). That is, after the fixed time elapses after the attachment start of the imaging device 100 to the information processing device 200 is detected, the attachment end is detected.

While the processing procedure of the attachment end detection processing by the information processing device 200 is illustrated in FIG. 11a, the processing procedure of the attachment end detection processing by the imaging device 100 is the same.

In the case of detecting the attachment end using the timer, it is also assumed that it is difficult for the user to recognize the detection. Accordingly, in the case of detecting the attachment end using the timer, at a timing at which the fixed time elapses after the attachment start is detected, that effect may be notified to the user. For instance, that effect can be notified by displaying a message of that effect at the input/output part 240 or outputting sound of the message of that effect.

### "Operation Example When Detecting Attachment End Using Attachment End Button"

Here, the operation example of detecting the attachment end using an attachment end button will be described.

The attachment end button may be provided in the individual devices as the operation member different from the attachment start button, or the attachment end button and the attachment start button may be provided in the individual devices as the same operation member.

For instance, when the attachment end button and the attachment start button are implemented by the same operation member, the operation member 224 illustrated in FIG. 8a can be used as the attachment end button of the information processing device 200. Similarly, for instance, when the attachment end button and the attachment start button are implemented by the same operation member, the operation member 164 illustrated in FIG. 8b can be used as the attachment end button of the imaging device 100.

In this way, in the case of using the attachment end button and the attachment start button as the same operation member, for instance, the first button pressing operation is determined as the operation for detecting the attachment start, and the next pressing operation is determined as the operation for detecting the attachment end.

Also, in the case of providing the attachment end button in the information processing device 200 as the operation member different from the attachment start button, for instance, the attachment end button can be provided on a part next to the operation member 224 illustrated in FIG. 8a. Similarly, in the case of providing the attachment end button in the imaging device 100 as the operation member different from the attachment start button, for instance, the attachment end button can be provided on a part next to the operation member 164 illustrated in FIG. 8b.

The attaching positions of the attachment end buttons are examples and the attachment end button may be provided on another position.

For the attachment end button, since there is a need for receiving the operation input for detecting the attachment end, even during the user operation invalid period, the operation is not invalidated and is validated. Therefore, it is preferable to install the attachment end button at a location with a low possibility of being touched by the user.

Next, the operation example in the case of detecting the attachment end using the attachment end button will be described with reference to FIG. 11b.

First, the control part 250 determines whether or not the attachment end button is pressed (step S925). Then, when the attachment end button is not pressed (step S925), monitoring is continuously performed.

Also, when the attachment end button is pressed (step S925), the control part 250 determines that the attachment of the imaging device 100 to the information processing device 200 is ended (step S926). That is, by the pressing of the attachment end button, the attachment end of the imaging device 100 to the information processing device 200 is detected.

While the processing procedure of the attachment end detection processing by the information processing device 200 is illustrated in FIG. 11b, the processing procedure of the attachment end detection processing by the imaging device 100 is the same.

### "Operation Example When Detecting Attachment End by One Device And Notifying That Effect to the Other Device"

Above, the examples that each of the individual devices detects the attachment end are illustrated. However, for instance, only one device may detect the attachment end and notify that effect to the other device. Thus, the other device may not have a function for detecting the attachment end.

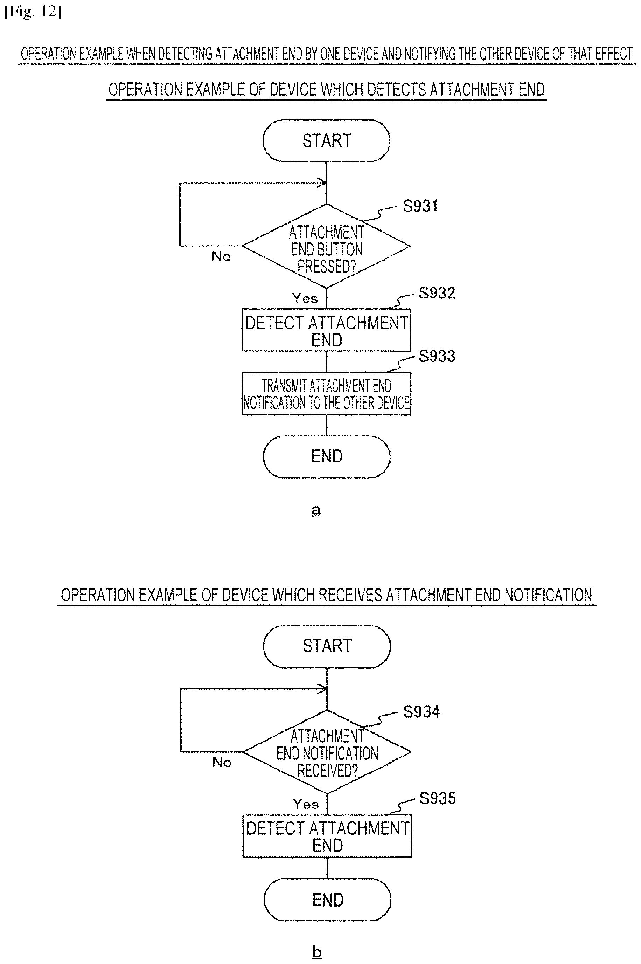

FIG. 12 is a flowchart illustrating one example of the processing procedure of the attachment end detection processing by the imaging device 100 and the information processing device 200 in the first embodiment of the present technology. FIG. 12 illustrates an operation example in the case of a state that the wireless communication between the imaging device 100 and the information processing device 200 is possible.

An operation example of a device which detects the attachment end is illustrated in FIG. 12a. In this example, an example that the device which detects the attachment end is the information processing device 200 is illustrated. Also, in this example, the operation example in the case of detecting the attachment end using the attachment end button is illustrated.

Since each processing in steps S931 and S932 corresponds to each processing in steps S925 and S926 illustrated in FIG. 11b, descriptions are omitted here.

When the attachment end of the imaging device 100 to the information processing device 200 is detected (step S932), the control part 250 transmits information (attachment end notification) for notifying that the attachment end is detected to the imaging device 100 (step S933).

An operation example of a device which receives the attachment end notification is illustrated in FIG. 12b. In this example, an example that the device which receives the attachment end notification is the imaging device 100 is illustrated.

First, the control part 140 determines whether or not the attachment end notification is received (step S934). Then, when the attachment end notification is not received (step S934), monitoring is continuously performed.

Also, when the attachment end notification is received (step S934), the control part 140 determines that the attachment of the imaging device 100 to the information processing device 200 is ended (step S935). That is, by receiving the attachment end notification, the attachment end of the imaging device 100 to the information processing device 200 is detected.

### "Example of Detecting Attachment End by Complicated Operation"

Above, the example of automatically detecting the attachment end by the timer and the example of detecting the attachment end by a simple operation (the pressing operation of the attachment end button) are illustrated. Here, an example of detecting the attachment end using the operation members provided in the imaging device 100 and the information processing device 200 will be illustrated. However, there is a risk of an erroneous operation when the attachment end is detected by a simple operation for the operation members. Accordingly, in the case of detecting the attachment end using the operation members provided in the imaging device 100 and the information processing device 200, the attachment end is detected by a complicated operation.

### "Example of Detecting Attachment End by Operation of Tracing Specific Pattern in Information Processing Device"

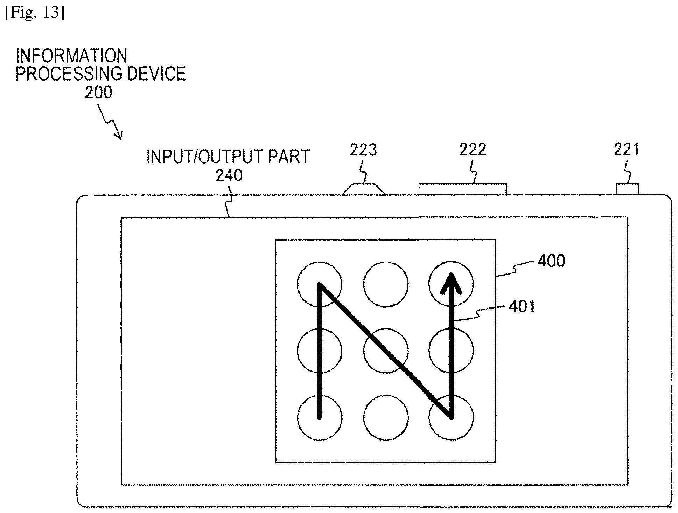

FIG. 13 is a diagram illustrating one example of a display screen (specific pattern screen 400) displayed at the input/output part 240 of the information processing device 200 in the first embodiment of the present technology.

The specific pattern screen 400 is, for instance, a display screen to be displayed immediately after the attachment start is detected. For instance, by tracing circles corresponding to a specific pattern among nine circles displayed on the specific pattern screen 400 in a predetermined order, the attachment end can be detected. For instance, as illustrated by an arrow 401, a pattern which has to be traced in a complicated manner is used as the specific pattern. For the specific pattern, the tracing order thereof may be displayed on the specific pattern screen 400.

After the attachment start is detected, the user operation is invalidated as described above, however, for the tracing operation corresponding to the specific pattern on the specific pattern screen 400, the reception thereof is validated.

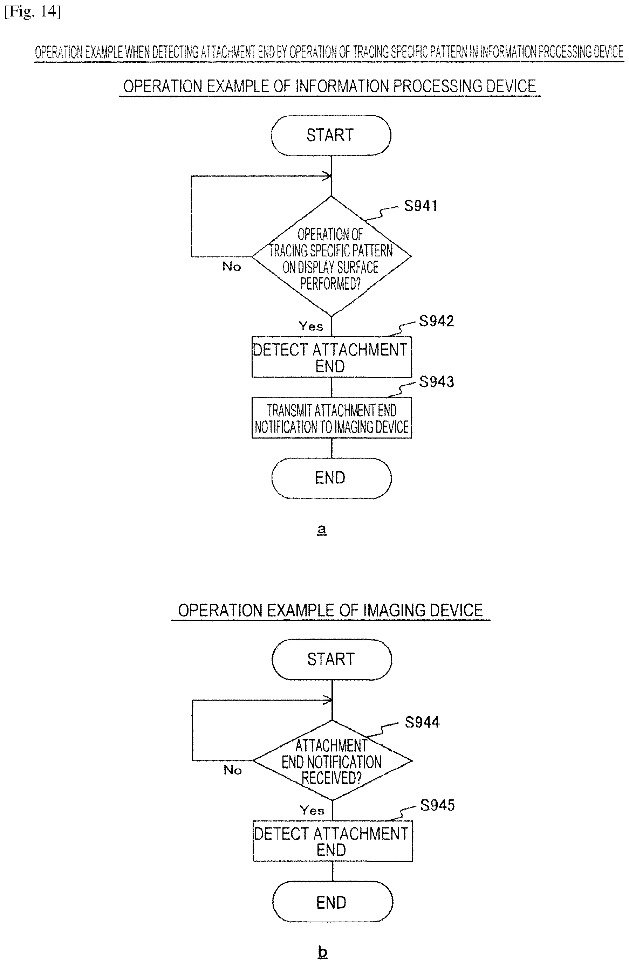

FIG. 14 is a flowchart illustrating one example of the processing procedure of the attachment end detection processing by the imaging device 100 and the information processing device 200 in the first embodiment of the present technology. FIG. 14 illustrates an operation example in the case of a state that the wireless communication between the imaging device 100 and the information processing device 200 is possible.

An operation example of the information processing device 200 is illustrated in FIG. 14a. In this example, the operation example in the case of detecting the attachment end by an operation of tracing the specific pattern is illustrated. Also, it is assumed that the specific pattern screen (for instance, the specific pattern screen 400 illustrated in FIG. 13) is displayed at the input/output part 240.

First, the control part 250 determines whether or not the operation of tracing the specific pattern is performed on the display surface at the input/output part 240 (step S941). Then, when the operation of tracing the specific pattern is not performed (step S941), monitoring is continuously performed.

Also, when the operation of tracing the specific pattern is performed (step S941), the control part 250 determines that the attachment of the imaging device 100 to the information processing device 200 is ended (step S942). That is, by the operation of tracing the specific pattern being performed, the attachment end of the imaging device 100 to the information processing device 200 is detected.

When the attachment end of the imaging device 100 to the information processing device 200 is detected (step S942), the control part 250 transmits the information (attachment end notification) for notifying that the attachment end is detected to the imaging device 100 (step S943).

An operation example of the imaging device 100 is illustrated in FIG. 14b. Since each processing in steps S944 and S945 corresponds to each processing in steps S934 and S935 illustrated in FIG. 12b, descriptions are omitted here.

### "Example of Detecting Attachment End by Two or More Times of Pressing Operations of Shutter Button in Imaging Device"

Next, an example of detecting the attachment end using the operation member provided in the imaging device 100 will be illustrated. Here, an example of detecting the attachment end using the shutter button (the operation member 161 illustrated in FIG. 1b) provided in the imaging device 100 is illustrated.

For instance, when the attachment of the imaging device 100 to the information processing device 200 is ended, the user presses the shutter button (the operation member 161 illustrated in FIG. 1b) provided in the imaging device 100 for a predetermined number of times within the predetermined time. Thus, the attachment end can be detected. For example, the attachment end can be detected by pressing the shutter button (the operation member 161 illustrated in FIG. 1b) continuously for three times within one second.

Also, after the attachment start is detected, the user operation is invalidated as described above, however, for the continuous operation of the shutter button (the operation member 161 illustrated in FIG. 1b), the reception thereof is validated.

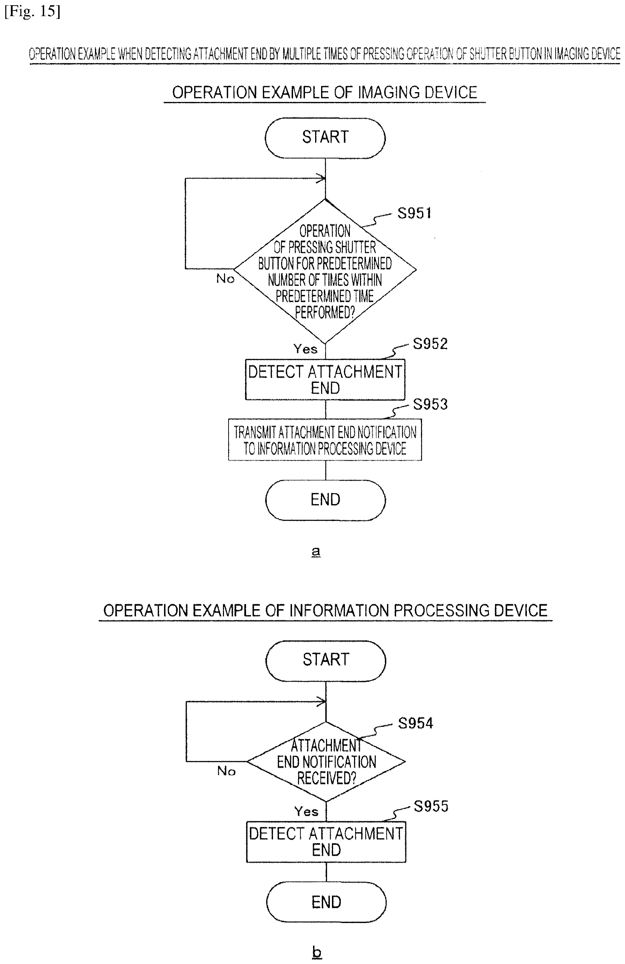

FIG. 15 is a flowchart illustrating one example of the processing procedure of the attachment end detection processing by the imaging device 100 and the information processing device 200 in the first embodiment of the present technology. In the example illustrated in FIG. 15, an operation example in the case of a state that the wireless communication between the imaging device 100 and the information processing device 200 is possible is illustrated.

An operation example of the imaging device 100 is illustrated in FIG. 15a. In this example, the operation example in the case of detecting the attachment end by pressing the shutter button (the operation member 161 illustrated in FIG. 1b) for two or more times within the predetermined time is illustrated.

First, the control part 140 determines whether or not the operation of pressing the shutter button (the operation member 161 illustrated in FIG. 1b) for a predetermined number of times within the predetermined time is performed (step S951). Then, when the pressing operation is not performed (step S951), monitoring is continuously performed.

Also, when the operation of pressing the shutter button for the predetermined number of times within the predetermined time is performed (step S951), the control part 140 determines that the attachment of the imaging device 100 to the information processing device 200 is ended (step S952). That is, by the operation of pressing the shutter button for the predetermined number of times within the predetermined time being performed, the attachment end of the imaging device 100 to the information processing device 200 is detected.

When the attachment end of the imaging device 100 to the information processing device 200 is detected (step S952), the control part 140 transmits the information (attachment end notification) for notifying that the attachment end is detected to the information processing device 200 (step S953).

An operation example of the information processing device 200 is illustrated in FIG. 15b.

First, the control part 250 determines whether or not the attachment end notification is received (step S954). Then, when the attachment end notification is not received (step S954), monitoring is continuously performed.

Also, when the attachment end notification is received (step S954), the control part 250 determines that the attachment of the imaging device 100 to the information processing device 200 is ended (step S955). That is, by receiving the attachment end notification, the attachment end of the imaging device 100 to the information processing device 200 is detected.

While an example of determining whether or not the operation of pressing the shutter button for the predetermined number of times within the predetermined time is performed is illustrated in this example, whether or not the operation of pressing the shutter button for the predetermined number of times or more within the predetermined time is performed may be determined.

In this way, the control part 250 of the information processing device 200 can detect the attachment end on the basis of at least one of the elapsed time from the time of detecting the attachment start, the operation input using the operation member, and the attachment end notification from the imaging device 100. Similarly, the control part 140 of the imaging device 100 can detect the attachment end on the basis of at least one of the elapsed time from the time of detecting the attachment start, the operation input using the operation member, and the attachment end notification from the information processing device 200.

### "Notification Example during User Operation Invalid Period"

As illustrated in FIG. 5a, in a period after the attachment start is detected until the attachment end is detected (the user operation invalid period 300), some or all of the user operations are invalidated. However, the user who does not recognize that some or all of the user operations are invalid is also assumed. Then, in the user operation invalid period, the user is notified that some or all of the user operations are invalid. Accordingly, a notification example during the user operation invalid period will be described below.

### "Notification Example by Imaging Device"

FIG. 16 is a diagram illustrating a transition example of a case of performing notification during the user operation invalid period by the imaging device 100 in the first embodiment of the present technology.

An appearance of the imaging device 100 before the attachment start is detected is illustrated in FIG. 16a. Also, an appearance of the imaging device 100 after the attachment start is detected until the attachment end is detected is illustrated in FIG. 16b. An appearance of the imaging device 100 after the attachment end is detected is illustrated in FIG. 16c.

For the imaging device 100 illustrated in FIG. 16a to IG. 16c, it is assumed that a light emitting diode (LED) 181 is provided in the imaging device 100 illustrated in FIG. 1a and FIG. 1b. Also, for the imaging device 100 illustrated in FIG. 16a to FIG. 16c, it is assumed that the display part 170 is provided in the imaging device 100 illustrated in FIG. 1a and FIG. 1b.

The LED 181 is controlled to be lighted, flicker and be put out under the control of the control part 140 illustrated in FIG. 3.

For instance, as illustrated in FIG. 16a, in the state before the attachment start is detected, the LED 181 is put out (illustrated by white, in FIG. 16a). Also, as illustrated in FIG. 16b, during the user operation invalid period, the LED 181 is made to flicker and displayed. Also, as illustrated in FIG. 16c, after the attachment end is detected, the LED 181 is lighted (illustrated by gray, in FIG. 16c).

Also, at the display part 170, usually, the individual pieces of information (for instance, the information for confirming the battery residual amount) related to the imaging device 100 are displayed as described above. Therefore, for instance, as illustrated in FIG. 16a, in the state before the attachment start is detected, the individual pieces of information related to the imaging device 100 are displayed at the display part 170. Also, as illustrated in FIG. 16b, during the user operation invalid period, the information for notifying that effect is displayed at the display part 170. Also, as illustrated in FIG. 16c, after the attachment end is detected, the individual pieces of information related to the imaging device 100 are displayed at the display part 170 similarly to the usual time.

### "Notification Example by Information Processing Device"

FIG. 17 is a diagram illustrating a transition example of a case of performing notification during the user operation invalid period by the information processing device 200 in the first embodiment of the present technology.

An appearance of the information processing device 200 before the attachment start is detected is illustrated in FIG. 17a. Also, an appearance of the information processing device 200 after the attachment start is detected until the attachment end is detected is illustrated in FIG. 17b. An appearance of the information processing device 200 after the attachment end is detected is illustrated in FIG. 17c. In FIG. 17a to FIG. 17c, it is assumed that the imaging operation using the imaging device 100 and the information processing device 200 is not performed in the state before the attachment start is detected.

For instance, as illustrated in FIG. 17a, in the state before the attachment start is detected, the display for the usual time is performed at the input/output part 240. Also, as illustrated in FIG. 17b, during the user operation invalid period, the message of that effect is displayed at the input/output part 240. However, in the case of detecting the attachment end by the operation of tracing the specific pattern, together with the message indicating that it is the user operation invalid period, the specific pattern screen (for instance, the specific pattern screen 400 illustrated in FIG. 13) is displayed.

Also, as illustrated in FIG. 17c, after the attachment end is detected, the individual pieces of information related to the imaging operation are displayed at the input/output part 240.

For instance, when the imaging operation using the imaging device 100 and the information processing device 200 is being performed, the image generated by the imaging part 110 of the imaging device 100 is displayed at the input/output part 240 as a live-view image. That is, the image generated by the imaging part 110 of the imaging device 100 is successively transmitted to the information processing device 200 through the wireless communication part 150 and 230, and the image is displayed at the input/output part 240 as the live-view image. The image data and the control data are exchanged between the imaging device 100 and the information processing device 200 utilizing the Wi-Fi. Also, in FIG. 17c, an example of displaying an image in which a mountain is an object as a live-view image 410 is illustrated.

Also, in FIG. 17c, an example of displaying the operation object for operating the imaging device 100 at the input/output part 240 when the imaging operation using the imaging device 100 and the information processing device 200 is being performed is illustrated. The operation object is displayed at the input/output part 240 around the live-view image, or on the live-view image, for instance.

Also, in FIG. 17c, an example of displaying the live-view image 410, displaying the plurality of operation objects 411-414 on both sides of the live-view image 410, and displaying the plurality of operation objects 415-417 on the live-view image 410 is illustrated. In FIG. 17c, descriptions will be given assuming that the user is right-handed.

The operation object 411 is the operation object to be pressed when switching an imaging mode of the imaging device 100. Also, the operation object 412 is the operation object to be pressed when performing a shutter operation of the imaging device 100. The operation object 413 is the operation object to be pressed when performing various kinds of setting operations of the imaging device 100. The operation object 414 is the operation object to be pressed when reproducing the image. Also, the operation objects 415 and 416 are the operation objects for displaying the various kinds of setting information of the imaging device 100 and changing individual settings.

Also, the operation object 417 is the operation object for performing the zoom operation of the imaging device 100. For instance, a W (wide) button (a wide side button) and a T (tele) button (tele side button) are displayed as the operation object 417. For instance, when the user operation is performed for the W button or the T button, the control part 250 acquires the control information according to the user operation, and transmits the control information to the control part 140 of the imaging device 100 through the wireless communication part 230 and 150. In the case of receiving the control information, the control part 140 of the imaging device 100 controls drive of the zoom lens of the imaging part 110 on the basis of the received control information.

In this way, during the user operation invalid period, by notifying the user of that effect, the user can visually and easily recognize that it is the user operation invalid period.

While the example of notifying the user by displaying the fact that it is the user operation invalid period is illustrated in FIG. 16 and FIG. 17, the user may be notified of that effect by sound output.

### "Operation Example of Imaging Device"

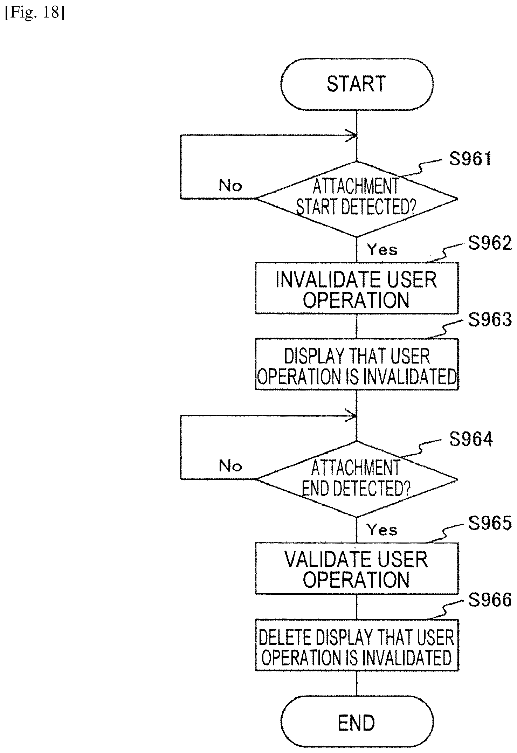

FIG. 18 is a flowchart illustrating one example of the processing procedure of operation member invalidation processing by the imaging device 100 in the first embodiment of the present technology.

First, the control part 140 determines whether or not the attachment start of the imaging device 100 to the information processing device 200 is detected (step S961). When the attachment start is not detected (step S961), monitoring is continuously performed.

Also, when the attachment start is detected (step S961), the control part 140 executes the control of invalidating the user operation of the individual operation members of the imaging device 100 (step S962). For instance, the control part 140 executes the control of invalidating the pressing operation of the operation members 161-163 (step S962). However, in the case of detecting the attachment end by the operation member (for instance, the attachment end button), only the reception of the operation member is validated. Also, step S962 is one example of the procedure of invalidating the user operation described in the scope of claims.

Subsequently, the control part 140 makes the display part 170 display the fact that the user operation is invalidated, and makes the LED 181 flicker (step S963). For instance, as illustrated in FIG. 16b, the fact that the user operation is invalidated is displayed at the display part 170, and the LED 181 is made to flicker and displayed (step S963).

Next, the control part 140 determines whether or not the attachment end of the imaging device 100 to the information processing device 200 is detected (step S964). When the attachment end is not detected (step S964), monitoring is continuously performed.

Also, when the attachment end is detected (step S964), the control part 140 executes the control of validating the individual operation members of the imaging device 100 (step S965). That is, invalidation of the user operation of the individual operation members is canceled.

Then, the control part 140 deletes the display of the fact that the user operation is invalidated from the display part 170, and stops flicker display of the LED 181 (step S966). For instance, as illustrated in FIG. 16c, the display of the fact that the user operation is invalidated is deleted, and the flicker display of the LED 181 is stopped and turned to lighting display.

### "Operation Example of Information Processing Device"

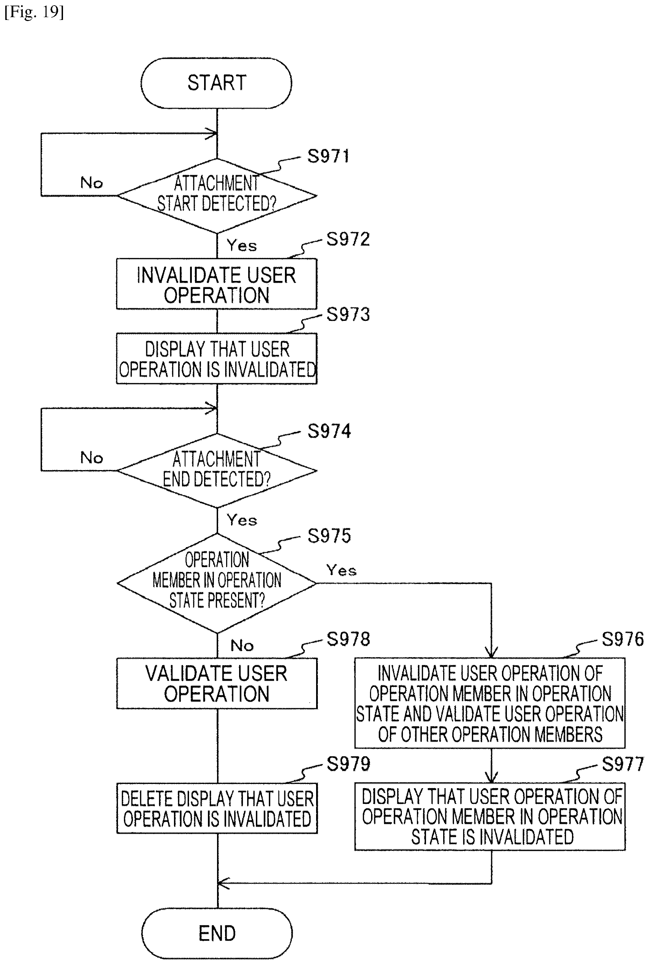

FIG. 19 is a flowchart illustrating one example of the processing procedure of operation member invalidation processing by the information processing device 200 in the first embodiment of the present technology. FIG. 19 illustrates an example of, in the case that there is the operation member in an operation state (for instance, the operation member in the state of being pressed by the attachment members 191 and 192 of the imaging device 100) when the attachment end is detected, invalidating the user operation of the operation member.

First, the control part 250 determines whether or not the attachment start of the imaging device 100 to the information processing device 200 is detected (step S971). When the attachment start is not detected (step S971), monitoring is continuously performed.

Also, when the attachment start is detected (step S971), the control part 250 executes the control of invalidating the user operation of the individual operation members of the information processing device 200 (step S972). For instance, the control part 250 executes the control of invalidating the touch operation at the input/output part 240 and the pressing operation of the operation members 221-223 (step S972). However, in the case of detecting the attachment end by the operation member (for instance, the attachment end button, the specific pattern screen at the input/output part 240), only the reception of the operation member is validated. Also, step S972 is one example of the procedure of invalidating the user operation described in the scope of claims.

Subsequently, the control part 250 makes the input/output part 240 display the fact that the user operation is invalidated (step S973). For instance, as illustrated in FIG. 17b, the fact that the user operation is invalidated is displayed at the input/output part 240 (step S973).

Next, the control part 250 determines whether or not the attachment end of the imaging device 100 to the information processing device 200 is detected (step S974). When the attachment end is not detected (step S974), monitoring is continuously performed.

Also, when the attachment end is detected (step S974), the control part 250 determines whether or not there is the operation member in the operation state (step S975). For instance, when the operation member 222 is in the state of being pressed by the attachment member 191 of the imaging device 100, it is determined that there is the operation member 222 in the operation state.

When there is the operation member in the operation state (step S975), the control part 250 executes the control of validating the user operation of the other operation members in the state of invalidating the operation member in the operation state (step S976). For instance, the case that the operation member 222 is in the state of being pressed by the attachment member 191 of the imaging device 100 is assumed. In this case, the control part 250 executes the control of invalidating the pressing operation of the operation member 222 and validating the user operation of the other operation members (the touch operation at the input/output part 240, the pressing operation of the operation members 221 and 223) (step S976).

Then, the control part 250 makes the input/output part 240 display the fact that the user operation of the operation member in the operation state is invalidated (step S977). Also, by the display, in the case that the operation state of the operation member is canceled by the user changing the attaching position of the imaging device 100, the user operation of the operation member is validated and that effect may be displayed again.

Also, when there is no operation member in the operation state (step S975), the control part 250 executes the control of validating the individual operation members of the information processing device 200 (step S978). That is, the invalidation of the user operation of the individual operation members is canceled.

Then, the control part 250 deletes the display of the fact that the user operation is invalidated from the input/output part 240 (step S979). For instance, as illustrated in FIG. 17c, the display of the fact that the user operation is invalidated is deleted, and the display screen related to the imaging operation is displayed at the input/output part 240.

In this way, in the first embodiment of the present technology, all or some of the user operations are invalidated after the attachment start of the imaging device 100 and the information processing device 200 is detected until the attachment end is detected. Thus, the malfunction by the user during the work can be prevented.

### <2. Second Embodiment

In the first embodiment of the present technology, the example of invalidating the user operation after the attachment start of the imaging device and the information processing device is detected until the attachment end is detected is illustrated. Also, as illustrated in FIG. 5b, the user operation can be invalidated similarly during the work of detaching the imaging device attached to the information processing device.

Then, in the second embodiment of the present technology, an example of invalidating the user operation after the detachment start of the imaging device and the information processing device is detected until the detachment end is detected is illustrated. The configuration of the imaging device and the information processing device in the second embodiment of the present technology is the same as the imaging device 100 and the information processing devices 200 illustrated in FIG. 1 to FIG. 3. Therefore, the same signs as the signs in the first embodiment of the present technology are attached to the individual devices in the second embodiment of the present technology, and some of the descriptions are omitted.

### "Detection Example of Detachment Start"

For instance, the detachment start of the imaging device 100 and the information processing device 200 can be detected using the operation member (for instance, the pressing operation of a detachment start button, the touch operation of an application end button on the touch panel).

### "Detection Example of Detachment End"

For instance, the detachment end can be detected using the timer. For instance, it is assumed that, within the fixed time after the detachment of the imaging device 100 and the information processing device 200 is started, the detachment work is to be ended. Accordingly, after the lapse of the fixed time after the detachment start of the imaging device 100 to the information processing device 200 is detected, the detachment end can be detected.

Also, for instance, the detachment end can be detected using the operation member (for instance, the pressing operation of the detachment end button, the operation of tracing the specific pattern on the touch panel). Also, for instance, the detachment end of the imaging device 100 and the information processing device 200 can be detected in the case of detecting that the distance between the imaging device 100 and the information processing device 200 is equal to or longer than the threshold using the short-range wireless communication or the reception radio field intensity.

The detection example of the detachment start and the detection example of the detachment end are examples and other detection methods may be used. Also, as illustrated in the first embodiment of the present technology, the detachment start and the detachment end may be detected by notifying a detection result of one device to the other device.

### "Operation Example of Information Processing Device"

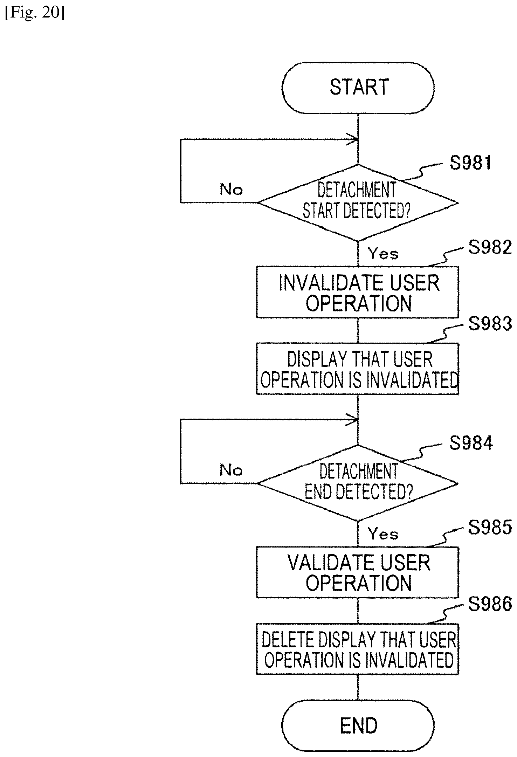

FIG. 20 is a flowchart illustrating one example of the processing procedure of operation member invalidation processing by the information processing device 200 in the second embodiment of the present technology.

First, the control part 250 determines whether or not the detachment start of the imaging device 100 to the information processing device 200 is detected (step S981). When the detachment start is not detected (step S981), monitoring is continuously performed.

Also, when the detachment start is detected (step S981), the control part 250 executes the control of invalidating the user operation of the individual operation members of the information processing device 200 (step S982). For instance, the control part 250 executes the control of invalidating the touch operation at the input/output part 240 and the pressing operation of the operation members 221-223 (step S982). However, in the case of detecting the detachment end by the operation member (for instance, the detachment end button, the specific pattern screen at the input/output part 240), only the reception of the operation member is validated. Also, step S982 is one example of the procedure of invalidating the user operation described in the scope of claims.

Subsequently, the control part 250 makes the input/output part 240 display the fact that the user operation is invalidated (step S983). For instance, as illustrated in b of FIG. 17, the fact that the user operation is invalidated is displayed at the input/output part 240 (step S983).

Next, the control part 250 determines whether or not the detachment end of the imaging device 100 to the information processing device 200 is detected (step S984). When the detachment end is not detected (step S984), monitoring is continuously performed.

Also, when the detachment end is detected (step S984), the control part 250 executes the control of validating the individual operation members of the information processing device 200 (step S985). That is, the invalidation of the user operation of the individual operation members is canceled.

Then, the control part 250 deletes the display of the fact that the user operation is invalidated from the input/output part 240 (step S986). For instance, as illustrated in FIG. 17a, the display of the fact that the user operation is invalidated is deleted, and the display screen for the usual time is displayed at the input/output part 240.

While FIG. 20 illustrates the processing procedure of the operation member invalidation processing by the information processing device 200, the processing procedure of the operation member invalidation processing by the imaging device 100 may be the same.

In this way, after the detachment start of the information processing device 200 and the imaging device 100 is detected until the detachment end is detected, the control part 250 of the information processing device 200 executes the control of invalidating the user operation of at least one of the individual operation members provided in the respective devices. Also, after the detachment start of the information processing device 200 and the imaging device 100 is detected until the detachment end is detected, the control part 140 of the imaging device 100 executes the control of invalidating the user operation of at least one of the individual operation members provided in the respective devices.

In this way, in the second embodiment of the present technology, all or some of the user operations are invalidated after the detachment start of the imaging device 100 and the information processing device 200 is detected until the detachment end is detected. Thus, the malfunction by the user's erroneous operation during the work can be prevented.

While the embodiment of the present technology is described taking a cylindrical (columnar) imaging device 100 as an example, the embodiment of the present technology is applicable also to the imaging devices in other shapes, that can be attached to the other device. Also, the embodiment of the present technology is described taking the information processing device 200 such as a smartphone or table terminal or the like as an example, the embodiment of the present technology is applicable also to the other devices that can be connected with the imaging device utilizing the wireless communication.

Also, in the embodiment of the present technology, the examples of the attachment work and the detachment work of the imaging device and the information processing device are described, however, the embodiment of the present technology is applicable also to the attachment work and the detachment work between the other devices. For instance, the embodiment of the present technology is applicable to the attachment work or the detachment work of a light emitting device and the imaging device (for instance, a digital still camera) to be used when photographing still images. Also, the embodiment of the present technology is applicable to the attachment work or the detachment work of a sound collecting device (for instance, a microphone) and the imaging device (for instance, a camera incorporated type recorder) to be used when photographing moving images. Also, the embodiment of the present technology is applicable to the attachment work or the detachment work of a sound output device (for instance, a speaker) and the imaging device (for instance, a camera incorporated type recorder) to be used when reproducing moving images.

Also, for instance, the embodiment of the present technology is applicable to the attachment work or the detachment work of a sound collecting device (for instance, a microphone) and the information processing device. Also, the embodiment of the present technology is applicable to the attachment work or the detachment work of a sound output device (for instance, a speaker) and the information processing device to be used when reproducing moving images. That is, the embodiment of the present technology can be recognized as an example of the device which executes the control of invalidating the user operation of at least one of the individual operation members provided in each of the individual devices during the attachment work or during the detachment work of the plurality of devices.

Also, the above-described embodiment illustrates one example for realizing the present technology, and matters in the embodiment and technology specifying matters in the scope of claims have correspondence relation respectively. Similarly, the technology specifying matters in the scope of claims and the matters in the embodiment of the present technology, to which the same names are attached, have the correspondence relation respectively.

Also, the processing procedures described in the above embodiment may be recognized as a method having a series of the procedures, or may be recognized as a program for making a computer execute a series of the procedures or a non-transitory computer-readable recording medium having the program recorded thereon. As the recording medium, for instance, a computer disc (CD), a minidisc (MD), a digital versatile disc (DVD), a memory card, and a Blu-ray (R) disc or the like are usable.

Effects described in the present description are just examples, the effects are not limited, and there may be other effects.

It should be understood by those skilled in the art that various modifications, combinations, sub-combinations and alterations may occur depending on design requirements and other factors insofar as they are within the scope of the appended claims

### Reference Signs List

100 imaging device
110 imaging part
120 image processing part
130 storage part
140 control part
150 wireless communication part
160 operation reception part
161-164 operation member
170 display part
180 lens barrel
191, 192 attachment member
195 mounting surface
200 information processing device
210 posture detection part
220 operation reception part
221-224 operation member
230 wireless communication part
240 input/output part
241 input part
242 display part
250 control part
260 image processing part
270 storage part
280 sound output part
291 light emitting part
292 imaging part

## Claims

1. An imaging device (100), wherein the imaging device is configured to be wirelessly remotely controllable by a portable communication device (200), the imaging device being further configured to be attachable to the portable communication device and being controllable by the portable communication device when attached to the portable communication device and when at a location away from the portable communication device, and comprising:
an information acquiring control circuit (140) configured to invalidate a user operation of the portable communication device and/or the imaging device in response to detection of a start of a process of physically attaching the imaging device to the portable communication device detected by a response by the imaging device to a near field communication polling command issued by the portable communication device, wherein
the information acquiring control circuit is configured to detect an end of the process of physically attaching the portable communication device to the imaging device at a fixed time after the start of the process of physically attaching the imaging device to the portable communication device, and further configured to stop invalidating the user operation of the portable communication device and/or the imaging device in response to the end.

2. The imaging device according to claim 1, wherein the imaging device and the portable communication device communicate wirelessly by one of a near field communication, a wireless local area network, Bluetooth, an infrared communication, portable radio waves, and combinations thereof.

3. A portable communication device (200), wherein the portable communication device is configured to wirelessly remotely control an imaging device (100), the imaging device being controllable by the portable communication device when attached to the portable communication device and when at a location away from the portable communication device, the portable communication device being further configured to be physically attachable to the imaging device, and comprising:
an information processing control circuit (250) configured to invalidate a user operation of the portable communication device and/or the imaging device in response to detection of a start of a process of physically attaching the portable communication device to the imaging device detected by a response by the imaging device to a near field communication polling command issued by the portable communication device, wherein
the information processing control circuit is configured to detect an end of the process of physically attaching the portable communication device to the imaging device at a fixed time after the start of the process of physically attaching the imaging device to the portable communication device, and further configured to stop invalidating the user operation of the portable communication device and/or the imaging device in response to the end.

4. The portable communication device according to claim 3, wherein the imaging device and the portable communication device communicate wirelessly by one of a near field communication, a wireless local area network, Bluetooth, an infrared communication, portable radio waves, and combinations thereof.

5. A non-transitory computer readable medium containing thereon instructions which, when executed, cause one or more processors to perform:
invalidating a user operation of a portable communication device and/or an imaging device in response to a start of a process of physically attaching the portable communication device to the imaging device detected by a response by the imaging device to a near field communication polling command issued by the portable communication device, wherein the portable communication device is configured to wirelessly remotely control the imaging device and the portable communication, the imaging device is controllable by the portable communication device when attached to the portable communication device and when at a location away from the portable communication device, and the imaging device is further configured to be attachable to the imaging device, wherein
detecting an end of the process of physically attaching the portable communication device to the imaging device at a fixed time after the start of the process of physically attaching the imaging device to the portable communication device, and stopping invalidating the user operation of the portable communication device and/or the imaging device in response to the end.

## Patentansprüche

1. Bildgebungsvorrichtung (100), wobei die Bildgebungsvorrichtung dafür ausgelegt ist, durch eine tragbare Kommunikationsvorrichtung (200) drahtlos fernsteuerbar zu sein, wobei die Bildgebungsvorrichtung ferner dafür ausgelegt ist, an der tragbaren Kommunikationsvorrichtung befestigbar zu sein, und durch die tragbare Kommunikationsvorrichtung steuerbar ist, wenn sie an der tragbaren Kommunikationsvorrichtung befestigt ist und wenn sie sich an einem von der tragbaren Kommunikationsvorrichtung entfernten Ort befindet, und umfasst:
eine Informationserfassungs-Steuerschaltung (140), die dafür ausgelegt ist, eine Betätigung der tragbaren Kommunikationsvorrichtung und/oder der Bildgebungsvorrichtung durch den Benutzer in Reaktion auf die Detektion eines Starts eines Prozesses des physischen Befestigens der Bildgebungsvorrichtung an der tragbaren Kommunikationsvorrichtung, der durch eine Reaktion der Bildgebungsvorrichtung auf einen von der tragbaren Kommunikationsvorrichtung ausgegebenen Nahfeldkommunikations-Abrufbefehl detektiert wird, ungültig zu machen, wobei
die Informationserfassungs-Steuerschaltung dafür ausgelegt ist, ein Ende des Prozesses des physischen Befestigens der tragbaren Kommunikationsvorrichtung an der Bildgebungsvorrichtung zu einem festen Zeitpunkt nach dem Start des Prozesses des physischen Befestigens der Bildgebungsvorrichtung an der tragbaren Kommunikationsvorrichtung zu detektieren, und ferner dafür ausgelegt ist, das Ungültigmachen der Betätigung der tragbaren Kommunikationsvorrichtung und/oder der Bildgebungsvorrichtung durch den Benutzer in Reaktion auf das Ende zu stoppen.

2. Bildgebungsvorrichtung nach Anspruch 1, wobei die Bildgebungsvorrichtung und die tragbare Kommunikationsvorrichtung entweder über eine Nahfeldkommunikation oder über ein drahtloses Lokalnetz, Bluetooth, eine Infrarotkommunikation, Mobilfunkwellen oder Kombinationen davon drahtlos kommunizieren.

3. Tragbare Kommunikationsvorrichtung (200), wobei die tragbare Kommunikationsvorrichtung dafür ausgelegt ist, eine Bildgebungsvorrichtung (100) drahtlos fernzusteuern, wobei die Bildgebungsvorrichtung durch die tragbare Kommunikationsvorrichtung steuerbar ist, wenn sie an der tragbaren Kommunikationsvorrichtung befestigt ist und wenn sie sich an einem von der tragbaren Kommunikationsvorrichtung entfernten Ort befindet, wobei die tragbare Kommunikationsvorrichtung ferner dafür ausgelegt ist, physisch an der Bildgebungsvorrichtung befestigbar zu sein, und umfasst:
eine Informationsverarbeitungs-Steuerschaltung (250), die dafür ausgelegt ist, eine Betätigung der tragbaren Kommunikationsvorrichtung und/oder der Bildgebungsvorrichtung durch den Benutzer in Reaktion auf die Detektion eines Starts eines Prozesses des physischen Befestigens der tragbaren Kommunikationsvorrichtung an der Bildgebungsvorrichtung, der durch eine Reaktion der Bildgebungsvorrichtung auf einen von der tragbaren Kommunikationsvorrichtung ausgegebenen Nahfeldkommunikations-Abrufbefehl detektiert wird, ungültig zu machen, wobei
die Informationsverarbeitungs-Steuerschaltung dafür ausgelegt ist, ein Ende des Prozesses des physischen Befestigens der tragbaren Kommunikationsvorrichtung an der Bildgebungsvorrichtung zu einem festen Zeitpunkt nach dem Start des Prozesses des physischen Befestigens der Bildgebungsvorrichtung an der tragbaren Kommunikationsvorrichtung zu detektieren, und ferner dafür ausgelegt ist, das Ungültigmachen der Betätigung der tragbaren Kommunikationsvorrichtung und/oder der Bildgebungsvorrichtung durch den Benutzer in Reaktion auf das Ende zu stoppen.

4. Tragbare Kommunikationsvorrichtung nach Anspruch 3, wobei die Bildgebungsvorrichtung und die tragbare Kommunikationsvorrichtung entweder über eine Nahfeldkommunikation oder über ein drahtloses Lokalnetz, Bluetooth, eine Infrarotkommunikation, Mobilfunkwellen oder Kombinationen davon drahtlos kommunizieren.

5. Nichttransitorisches computerlesbares Medium, das auf ihm gespeicherte Anweisungen enthält, welche, wenn sie ausgeführt werden, bewirken, dass ein oder mehrere Prozessoren Folgendes ausführen:
Ungültigmachen einer Betätigung einer tragbaren Kommunikationsvorrichtung und/oder einer Bildgebungsvorrichtung durch einen Benutzer in Reaktion auf einen Start eines Prozesses des physischen Befestigens der tragbaren Kommunikationsvorrichtung an der Bildgebungsvorrichtung, der durch eine Reaktion der Bildgebungsvorrichtung auf einen von der tragbaren Kommunikationsvorrichtung ausgegebenen Nahfeldkommunikations-Abrufbefehl detektiert wird, wobei die tragbare Kommunikationsvorrichtung dafür ausgelegt ist, die Bildgebungsvorrichtung und die tragbare Kommunikation drahtlos fernzusteuern, die Bildgebungsvorrichtung durch die tragbare Kommunikationsvorrichtung steuerbar ist, wenn sie an der tragbaren Kommunikationsvorrichtung befestigt ist und wenn sie sich an einem von der tragbaren Kommunikationsvorrichtung entfernten Ort befindet, und die Bildgebungsvorrichtung ferner dafür ausgelegt ist, an der Bildgebungsvorrichtung befestigbar zu sein, wobei
Detektieren eines Endes des Prozesses des physischen Befestigens der tragbaren Kommunikationsvorrichtung an der Bildgebungsvorrichtung zu einem festen Zeitpunkt nach dem Start des Prozesses des physischen Befestigens der Bildgebungsvorrichtung an der tragbaren Kommunikationsvorrichtung, und Stoppen des Ungültigmachens der Betätigung der tragbaren Kommunikationsvorrichtung und/oder der Bildgebungsvorrichtung durch den Benutzer in Reaktion auf das Ende.

## Revendications

1. Dispositif d'imagerie (100), le dispositif d'imagerie étant configuré pour être commandé à distance sans fil par un dispositif de communication portable (200), le dispositif d'imagerie étant en outre configuré pour pouvoir être fixé au dispositif de communication portable et pouvant être commandé par le dispositif de communication portable lorsqu'il est fixé au dispositif de communication portable et lorsqu'il est à un emplacement éloigné du dispositif de communication portable, et comprenant :
un circuit de commande d'acquisition d'informations (140) configuré pour invalider une opération d'utilisateur du dispositif de communication portable et/ou du dispositif d'imagerie en réponse à la détection d'un début d'un processus consistant à fixer physiquement le dispositif d'imagerie au dispositif de communication portable détecté par une réponse par le dispositif d'imagerie à une commande d'interrogation de communication en champ proche émise par le dispositif de communication portable,
le circuit de commande d'acquisition d'informations étant configuré pour détecter une fin du processus de fixation physique du dispositif de communication portable au dispositif d'imagerie à un moment fixe après le début du processus de fixation physique du dispositif d'imagerie au dispositif de communication portable, et configuré en outre pour arrêter l'invalidation de l'opération d'utilisateur du dispositif de communication portable et/ou du dispositif d'imagerie en réponse à la fin.

2. Dispositif d'imagerie selon la revendication 1, le dispositif d'imagerie et le dispositif de communication portable communiquant sans fil par l'intermédiaire d'une communication en champ proche, un réseau local sans fil, Bluetooth, une communication infrarouge, des ondes radio portables, et des combinaisons de ceux-ci.

3. Dispositif de communication portable (200), le dispositif de communication portable étant configuré pour commander à distance sans fil un dispositif d'imagerie (100), le dispositif d'imagerie pouvant être commandé par le dispositif de communication portable lorsqu'il est fixé au dispositif de communication portable et lorsqu'il est à un emplacement éloigné du dispositif de communication portable, le dispositif de communication portable étant en outre configuré pour être physiquement fixé au dispositif d'imagerie, et comprenant :
un circuit de commande de traitement d'informations (250) configuré pour invalider une opération d'utilisateur du dispositif de communication portable et/ou du dispositif d'imagerie en réponse à la détection d'un début d'un processus consistant à fixer physiquement le dispositif de communication portable au dispositif d'imagerie détecté par une réponse par le dispositif d'imagerie à une commande d'interrogation de communication en champ proche émise par le dispositif de communication portable,
le circuit de commande de traitement d'informations étant configuré pour détecter une fin du processus de fixation physique du dispositif de communication portable au dispositif d'imagerie à un moment fixe après le début du processus de fixation physique du dispositif d'imagerie au dispositif de communication portable, et configuré en outre pour arrêter l'invalidation de l'opération d'utilisateur du dispositif de communication portable et/ou du dispositif d'imagerie en réponse à la fin.

4. Dispositif de communication portable selon la revendication 3, le dispositif d'imagerie et le dispositif de communication portable communiquant sans fil par l'intermédiaire de l'un parmi une communication en champ proche, un réseau local sans fil, Bluetooth, une communication infrarouge, des ondes radio portables, et des combinaisons de ceux-ci.

5. Support lisible par ordinateur non transitoire contenant des instructions qui, lorsqu'elles sont exécutées, amènent un ou plusieurs processeurs à effectuer : l'invalidation d'une opération d'utilisateur d'un dispositif de communication portable et/ou d'un dispositif d'imagerie en réponse à un début d'un processus de fixation physique du dispositif de communication portable au dispositif d'imagerie détecté par une réponse par le dispositif d'imagerie à une commande d'interrogation de communication en champ proche émise par le dispositif de communication portable, le dispositif de communication portable étant configuré pour commander à distance sans fil le dispositif d'imagerie et la communication portable, le dispositif d'imagerie pouvant être commandé par le dispositif de communication portable lorsqu'il est fixé au dispositif de communication portable et lorsqu'il est à un emplacement éloigné du dispositif de communication portable, et le dispositif d'imagerie étant en outre configuré pour être fixé au dispositif d'imagerie, dans lequel
la détection d'une fin du processus de fixation physique du dispositif de communication portable au dispositif d'imagerie à un moment fixe après le début du processus de fixation physique du dispositif d'imagerie au dispositif de communication portable, et l'arrêt de l'invalidation de l'opération d'utilisateur du dispositif de communication portable et/ou du dispositif d'imagerie en réponse à la fin.
